(19) Europäisches Patentamt / European Patent Office / Office européen des brevets

(11) **EP 4 495 205 A1**

(12) **EUROPEAN PATENT APPLICATION**
published in accordance with Art. 153(4) EPC

(43) Date of publication:
**22.01.2025 Bulletin 2025/04**

(21) Application number: **23770880.5**

(22) Date of filing: **16.03.2023**

(51) International Patent Classification (IPC):
**C09K 5/04** (2006.01)

(52) Cooperative Patent Classification (CPC):
**B60H 1/22; C09K 5/04; F25B 1/00**

(86) International application number:
**PCT/JP2023/010314**

(87) International publication number:
**WO 2023/176927 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.03.2022 JP 2022041678**

(71) Applicant: DAIKIN INDUSTRIES, LTD.
**Osaka-shi, Osaka 530-0001 (JP)**

(72) Inventors:
• ITANO, Mitsushi
  **Osaka-Shi, Osaka 530-0001 (JP)**
• GOBOU, Kenji
  **Osaka-Shi, Osaka 530-0001 (JP)**
• NAKAUE, Tsubasa
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **COMPOSITION CONTAINING REFRIGERANT, USE OF SAME, REFRIGERATOR COMPRISING SAME, AND METHOD FOR OPERATING REFRIGERATOR**

(57) An object of the present disclosure is to provide a novel low-GWP mixed refrigerant. To achieve the object, provided is a composition comprising a refrigerant, the refrigerant comprising 2,3,3,3-tetrafluoro-1-propene(R1234yf) and/or 1,3,3,3-tetrafluoropropene (R1234ze), trans-1,2-difluoroethylene (HFO-1132(E)), and $CO_2$, wherein the content of HFO-1132(E) is 30 mass% or less, and the content of $CO_2$ is 10 mass% or less based on the entire refrigerant.

Fig. 1

EP 4 495 205 A1

## Description

Technical Field

The present disclosure relates to a composition comprising a refrigerant, use of the composition, a refrigerating machine having the composition, and a method for operating the refrigerating machine.

Background Art

Background Art

R404A, R134a, or the like is currently used as a refrigerant.
However, the global warming potential (GWP) of R404A is 3920, and the GWP of R134a is 1430. Due to growing concerns about global warming, R32, which has a GWP of 675, has been increasingly used.
Further, various low-GWP mixed refrigerants that can replace R404A and R134a have been proposed (PTL 1).

Citation List

Patent Literature

PTL 1: WO2015/186557

Summary of Invention

Technical Problem

An object of the present invention is to provide a novel low-GWP mixed refrigerant.

Solution to Problem

Item 1. A composition comprising a refrigerant,

the refrigerant comprising 2,3,3,3-tetrafluoro-1-propene(R1234yf) and/or 1,3,3,3-tetrafluoropropene (R1234ze), trans-1,2-difluoroethylene (HFO-1132(E)), and $CO_2$,
wherein the content of HFO-1132(E) is 30 mass% or less, and the content of $CO_2$ is 10 mass% or less, based on the entire refrigerant.

Item 2. The composition according to Item 1, wherein

the refrigerant comprises R1234yf, and
when the mass% of HFO-1132(E), R1234yf, and $CO_2$ based on their sum is respectively represented by x, y, and z, coordinates (x,y,z) in a ternary composition diagram in which the sum of HFO-1132(E), R1234yf, and $CO_2$ is 100 mass% are within the range of a figure surrounded by straight lines $A_{r=0}B_{r=0}$, $B_{r=0}O_{r=0}$, and $O_{r=0}A_{r=0}$ that connect the following 3 points:

point $A_{r=0}$ (30.0, 69.1, 0.9),
point $B_{r=0}$ (6.2, 83.8, 10.0), and
point $O_{r=0}$ (30.0, 60.0, 10.0), or
on the above straight lines.

Item 3. The composition according to Item 1, wherein

the refrigerant comprises R1234ze, and
when the mass% of HFO-1132 (E), R1234ze and $CO_2$ based on their sum is respectively represented by x, y, and z, coordinates (x,y,z) in a ternary composition diagram in which the sum of HFO-1132(E), R1234ze, and $CO_2$ is 100 mass% are within the range of a figure surrounded by straight lines $A_{r=1}B_{r=1}$, $B_{r=1}O_{r=1}$, and $O_{r=1}A_{r=1}$ that

connect the following 3 points:

point $A_{r=1}$ (30.0, 62.9, 7.1),
point $B_{r=1}$ (23.1, 66.9, 10.0), and
point $O_{r=1}$ (30.0, 60.0, 10.0), or
on the above straight lines.

Item 4. The composition according to Item 1, wherein

the refrigerant comprises R1234yf and R1234ze, and
when a ratio of R1234ze to the sum of R1234yf and R1234ze is represented by r ($0<r<1$), and
when the mass% of HFO-1132(E), the sum of R1234yf and R1234ze (R1234yf+R1234ze), and $CO_2$ based on
their sum is respectively represented by x, y, and z, coordinates (x,y,z) in a ternary composition diagram in which
the sum of HFO-1132(E), R1234yf+R1234ze, and $CO_2$ is 100 mass% are within the range of a figure surrounded
by straight lines $A_{r=0}B_{r=0}$, $B_{r=0}O_{r=0}$, and $O_{r=0}A_{r=0}$ that connect the following 3 points:

point $A_r$ (30.0, -6.2r+69.1, 6.2r+0.9),
point $B_r$ ($0.2r^2+16.7r+6.2$, $-0.2r^2-16.7r+83.8$, 10.0), and
point $O_r$ (30.0, 60.0, 10.0), or
on the above straight lines.

Item 5. The composition according to Item 1, wherein

the refrigerant comprises R1234yf, and
when the mass% of HFO-1132(E), R1234yf and $CO_2$ based on their sum is respectively represented by x, y, and z,
coordinates (x,y,z) in a ternary composition diagram in which the sum of HFO-1132(E), R1234yf, and $CO_2$ is 100
mass% are within the range of a figure surrounded by line segments $H_{r=0}I_{r=0}$, $I_{r=0}J_{r=0}$, $J_{r=0}J2_{r=0}$, $J2_{r=0}K2_{r=0}$,
$K2_{r=0}K_{r=0}$, $K_{r=0}Q_{r=0}$, and $Q_{r=0}H_{r=0}$ that connect the following 7 points:

point $H_{r=0}$ (12.2, 87.8, 0.0),
point $I_{r=0}$ (0.0, 98.1, 1.9),
point $J_{r=0}$ (0.0, 94.8, 5.2),
point $J2_{r=0}$ (10.0, 85.4, 4.6),
point $K2_{r=0}$ (20.0, 75.1, 4.9),
point $K_{r=0}$ (30.0, 64.0, 6.0), and
point $Q_{r=0}$ (30.0, 70.0, 0.0), or
on the above line segments $H_{r=0}I_{r=0}$, $I_{r=0}J_{r=0}$, $J_{r=0}K_{r=0}$, and $K_{r=0}Q_{r=0}$ (excluding points $H_{r=0}$ and Qr=o) ;

the line segments $I_{r=0}J_{r=0}$, $K_{r=0}Q_{r=0}$, and $Q_{r=0}H_{r=0}$ are straight lines;
the coordinates (x,y,z) of points on the line segment $H_{r=0}I_{r=0}$ are represented by (x, $-0.0013x^2-0.8279x+98.1$, $0.0013x^2-0.1721x+1.9$);
the coordinates (x,y,z) of points on the line segment $J_{r=0}J2_{r=0}$ are represented by (x, $-0.004x^2-0.9x+94.8$, $0.004x^2-0.1x+5.2$);
the coordinates (x,y,z) of points on the line segment $J2_{r=0}K2_{r=0}$ are represented by (x, $-0.006x^2-0.85x+94.5$, $0.006x^2-0.15x+5.5$); and
the coordinates (x,y,z) of points on the line segment $K2_{r=0}K_{r=0}$ are represented by (x, $-0.002x^2-1.01x+96.1$, $0.002x^2+0.01x+3.9$).

Item 6. The composition according to Item 1, wherein

the refrigerant comprises R1234ze, and
when the mass% of HFO-1132 (E), R1234ze and $CO_2$ based on their sum is respectively represented by x, y, and
z, coordinates (x,y,z) in a ternary composition diagram in which the sum of HFO-1132(E), R1234ze, and $CO_2$ is
100 mass% are within the range of a figure surrounded by line segments $H_{r=1}I_{r=1}$, $I_{r=1}J_{r=1}$, $J_{r=1}J2_{r=1}$, $J2_{r=1}K2_{r=1}$,
$K2_{r=1}K_{r=1}$, $K_{r=1}Q_{r=1}$, and $Q_{r=1}H_{r=1}$ that connect the following 7 points:

point $H_{r=1}$ (22.7, 77.3, 0.0),
point $I_{r=1}$ (0.0, 96.4, 3.6),

point $J_{r=1}$ (0.0, 96.1, 3.9),
point $J2_{r=1}$ (10.0, 87.6, 2.4),
point $K2_{r=1}$ (20.0, 78.1, 1.9),
point $K_{r=1}$ (30.0, 67.8, 2.2), and
point $Q_{r=1}$ (30.0, 70.0, 0.0), or
on the above line segments $H_{r=1}I_{r=1}$, $I_{r=1}J_{r=1}$, $J_{r=1}K_{r=1}$, and $K_{r=1}Q_{r=1}$ (excluding points $H_{r=1}$ and $Q_{r=1}$);

the line segments $I_{r=1}J_{r=1}$, $K_{r=1}Q_{r=1}$, and $Q_{r=1}H_{r=1}$ are straight lines;
the coordinates (x,y,z) of points on the line segment $H_{r=1}I_{r=1}$ are represented by (x, $-0.003x^2-0.7723x+96.4$, $0.003x^2-0.2277x+3.6$);
the coordinates (x,y,z) of points on the line segment $J_{r=1}J2_{r=1}$ are represented by (x, $-0.006x^2-0.79x+96.1$, $0.006x^2-0.21x+3.9$);
the coordinates (x,y,z) of points on the line segment $J2_{r=1}K2_{r=1}$ are represented by (x, $-0.002x^2-0.89x+96.7$, $0.002x^2-0.11x+3.3$); and
the coordinates (x,y,z) of points on the line segment $K2_{r=1}K_{r=1}$ are represented by (x, $-0.002x^2-0.93x+97.5$, $0.002x^2-0.07x+2.5$) .

Item 7. The composition according to Item 1, wherein

the refrigerant comprises R1234yf and R1234ze, and
when a ratio of R1234ze to the sum of R1234yf and R1234ze is represented by r (0<r<1), and
when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by line segments $H_rI_r$, $I_rJ_r$, $J_rJ2_r$, $J2_rK2_r$, $K2_rK_r$, $K_rQ_r$, and $Q_rH_r$ that connect the following 7 points:

point $H_r$ ($r^2+9.5r+12.2$, $-r^2-9.5r+87.8$, 0.0),
point $I_r$ (0.0, $-0.6r^2-1.1r+98.1$, $0.6r^2+1.1r+1.9$),
point $J_r$ (0.0, $-0.6r^2+1.9r+94.8$, $0.6r^2-1.9r+5.2$),
point $J2_r$ (10.0, $-0.4r^2+2.6r+85.4$, $0.4r^2-2.6r+4.6$),
point $K2_r$ (20.0, $3.0r+75.1$, $-3.0r+4.9$),
point $K_r$ (30.0, $-0.4r^2+4.2r+64.0$, $0.4r^2-4.2r+6.0$), and
point $Q_r$ (70.0, 30.0, 0.0), or
on the above line segments $H_rI_r$, $I_rJ_r$, $J_rK_r$, and $K_rQ_r$ (excluding points $H_r$ and Qr) ;

the line segments $I_rJ_r$, $K_rQ_r$, and $Q_rH_r$ are straight lines;
the coordinates (x,y,z) of points on the line segment $H_rI_r$ are represented by (x, $(-0.003r^2+0.0013r-0.0013)x^2+(0.102r^2-0.0464r-0.8279)x+(-0.6r^2-1.1r+98.1)$, $(0.003r^2-0.0013r+0.0013)x^2+(-0.102r^2+0.0464r-0.1721)x+(0.6r^2+1.1r+1.9)$);
the coordinates (x,y,z) of points on the line segment $J_rJ2_r$ are represented by (x, $(0.0068r^2-0.0034r-0.004)x^2+(0.06r^2+0.05r-0.9)x+(-0.6r^2+1.9r+94.8)$, $(0.004r^2-0.002r+0.004)x^2+(-0.06r^2-0.05r-0.1)x+(0.6r^2-1.9r+5.2)$);
the coordinates (x,y,z) of points on the line segment $J2_rK2_r$ are represented by (x, $(0.016r^2-0.012r-0.006)x^2+(-0.44r^2+0.4r-0.85)x+(2.4r^2-0.2r+94.5)$, $(-0.016r^2+0.012r+0.006)x^2+(0.44r^2-0.4r-0.15)x+(-2.4r^2+0.2r+5.5)$); and
the coordinates (x,y,z) of points on the line segment $K2_rK_r$ are represented by (x, $(0.008r^2-0.008r-0.002)x^2+(-0.44r^2+0.52r-1.01)x+(5.6r^2-4.2r+96.1)$, $(-0.008r^2+0.008r+0.002)x^2+(0.44r^2-0.52r+0.01)x+(-5.6r^2+4.2r+3.9)$)). Item 8.

The composition according to any one of Items 1 to 7, for use as a working fluid for a refrigerating machine, wherein the composition further comprises a refrigeration oil.

Item 9. The composition according to any one of Items 1 to 4, for use as an alternative refrigerant for R134a, R1234yf, or R404A.
Item 10. Use of the composition according to any one of Items 1 to 4 as a refrigerant.
Item 11. An electric vehicle refrigerant comprising the composition according to any one of Items 5 to 7.
Item 12. A refrigerating machine comprising the composition according to any one of Items 1 to 8 as a working fluid.
Item 13. A method for operating a refrigerating machine, comprising the step of circulating the composition according to any one of Items 1 to 8 as a working fluid in a refrigerating machine.

Advantageous Effects of Invention

The refrigerant of the present disclosure has a sufficiently low GWP.

Brief Description of Drawings

Fig. 1 is a diagram showing points and line segments that define the refrigerant of the present disclosure in a ternary composition diagram in which the sum of HFO-1132(E), R1234yf, and $CO_2$ is 100 mass%.
Fig. 2 is a diagram showing points and line segments that define the refrigerant of the present disclosure in a ternary composition diagram in which the sum of HFO-1132(E), R1234ze, and $CO_2$ is 100 mass%.
Fig. 3 is a diagram showing points and line segments that define the refrigerant of the present disclosure when a ratio of R1234ze to the sum of R1234yf and R1234ze is r (0<r<1) in an enlarged ternary composition diagram in which the sum of HFO-1132(E), R1234yf, R1234ze, and $CO_2$ is 100 mass%.
Fig. 4 is a diagram showing points and line segments that define the refrigerant of the present disclosure in a ternary composition diagram in which the sum of HFO-1132(E), R1234yf, and $CO_2$ is 100 mass%.
Fig. 5 is a diagram showing points and line segments that define the refrigerant of the present disclosure in a ternary composition diagram in which the sum of HFO-1132(E), R1234ze, and $CO_2$ is 100 mass%.
Fig. 6 is a diagram showing points and line segments that define the refrigerant of the present disclosure when a ratio of R1234ze to the sum of R1234yf and R1234ze is r (0<r<1) in an enlarged ternary composition diagram in which the sum of HFO-1132(E), R1234yf, R1234ze, and $CO_2$ is 100 mass%.

Description of Embodiments

The present inventors performed independent examination and developed refrigerant compositions that have performance, i.e., a refrigerating capacity (also referred to as "cooling capacity" and "capacity") that is equivalent to or higher than that of R134a, R1234yf, or R404A and a sufficiently low GWP in the conventional art. In addition, the present inventors performed independent examination and similarly developed refrigerant compositions for a working fluid used in air-conditioning equipment for electric vehicles. The present inventors have conducted extensive research to find that a refrigerant comprising trans-1,2-difluoroethylene (HFO-1132(E)), 2,3,3,3-tetrafluoro-1-propene(R1234yf), and/or 1,3,3,3-tetrafluoropropene (R1234ze), and $CO_2$ has the characteristics described above, wherein trans-1,2-difluoroethylene (HFO-1132(E)) is 30 mass% or less, and the content of $CO_2$ is 10 mass% or less, based on the entire refrigerant.
The present disclosure has been completed as a result of further research based on this finding. The present disclosure includes the following embodiments.

<Definition of Terms>

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.
In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."
In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine (refrigerator)" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, "air-conditioning equipment for vehicles" is a type of refrigeration apparatus for use in vehicles, such as gasoline vehicles, hybrid vehicles, electric vehicles, and hydrogen vehicles. The air-conditioning equipment for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, pressure indicates an absolute pressure unless otherwise specified.

1. Refrigerant

1.1 Refrigerant Component

The refrigerant of the present disclosure is a mixed refrigerant comprising R1234yf and/or R1234ze, and $CO_2$, and further comprising 30 mass% or less of HFO-1132(E) based on the entire refrigerant, wherein the content of $CO_2$ is refrigerant 10 mass% or less based on the entire refrigerant.

The refrigerant of the present disclosure has a sufficiently low GWP.

In the refrigerant of the present disclosure, when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), the sum of R1234yf and R1234ze, and $CO_2$ is 100 mass% satisfy the following requirements, the disproportionation reaction does not occur at 3 MPa and 150°C, and no measures for disproportionation of equipment is required.

The refrigerant of the present disclosure may be a refrigerant comprising R1234yf, wherein when the mass% of HFO-1132(E), R1234yf, and $CO_2$ based on their sum is respectively represented by x, y, and z, coordinates (x,y,z) in a ternary composition diagram in which the sum of HFO-1132(E), R1234yf, and $CO_2$ is 100 mass% are within the range of a figure surrounded by straight lines $A_{r=0}B_{r=0}$, $B_{r=0}O_{r=0}$, and $O_{r=0}A_{r=0}$ that connect the following 3 points:

point $A_{r=0}$ (30.0, 69.1, 0.9),
point $B_{r=0}$ (6.2, 83.8, 10.0), and
point $O_{r=0}$ (30.0, 60.0, 10.0), or
on the above straight lines. In this case, the refrigerant of the present disclosure has a refrigerating capacity ratio of 90% or more relative to that of R404A.

The refrigerant of the present disclosure may be a refrigerant comprising R1234yf, wherein coordinates (x,y,z) in a ternary composition diagram in which the sum of HFO-1132(E), R1234yf, and $CO_2$ is 100 mass% are within the range of a figure surrounded by straight lines $E_{r=0}F_{r=0}$, $F_{r=0}O_{r=0}$, and $O_{r=0}E_{r=0}$ that connect the following 3 points:

point $E_{r=0}$ (30.0, 66.2, 3.8),
point $E_{r=0}$ (13.4, 76.6, 10.0), and
point $O_{r=0}$ (30.0, 60.0, 10.0), or
on the above straight lines. In this case, the refrigerant of the present disclosure has a refrigerating capacity ratio of 100% or more relative to that of R404A.

The refrigerant of the present disclosure may be a refrigerant comprising R1234ze, wherein when the mass% of HFO-1132(E), R1234ze and $CO_2$ based on their sum is respectively represented by x, y, and z, coordinates (x,y,z) in a ternary composition diagram in which the sum of HFO-1132(E), R1234ze, and $CO_2$ is 100 mass% are within the range of a figure surrounded by straight lines $A_{r=1}B_{r=1}$, $B_{r=1}O_{r=1}$, and $O_{r=1}A_{r=1}$ that connect the following 3 points:

point $A_{r=1}$ (30.0, 62.9, 7.1),
point $B_{r=1}$ (23.1, 66.9, 10.0), and
point $O_{r=1}$ (30.0, 60.0, 10.0), or
on the above straight lines. In this case, the refrigerant of the present disclosure has a refrigerating capacity ratio of 90% or more relative to that of R404A.

The refrigerant of the present disclosure may be a refrigerant comprising 30.0 mass% of HFO-1132(E), 60.0 mass% of R1234ze, and 10.0 mass% of $CO_2$ based on the sum of HFO-1132(E), R1234ze, and $CO_2$. In this case, the refrigerant of the present disclosure has a refrigerating capacity ratio of 100% relative to that of R404A.
The refrigerant of the present disclosure may be a refrigerant, wherein

when a ratio of R1234ze to the sum of R1234yf and R1234ze is represented by r (0<r<1), and
when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by straight lines $A_{r=0}B_{r=0}$, $B_{r=0}O_{r=0}$, and $O_{r=0}A_{r=0}$ that connect the following 3 points:

point $A_r$ (30.0, -6.2r+69.1, 6.2r+0.9),
point $B_r$ ($0.2r^2+16.7r+6.2$, $-0.2r^2-16.7r+83.8$, 10.0), and
point $O_r$ (30.0, 60.0, 10.0), or
on the above straight lines. In this case, the refrigerant of the present disclosure has a refrigerating capacity ratio of 90% or more relative to that of R404A.

The refrigerant of the present disclosure may be a refrigerant, wherein

when a ratio of R1234ze to the sum of R1234yf and R1234ze is represented by r (0<r<1), and
when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by straight lines $A_rB_r$, $B_rO_r$, and $O_rA_r$ that connect the following 3 points:

point $E_r$ (30.0, $0.4r^2-6.6r+66.2$, $-0.4r^2+6.6r+3.8$),
point $F_r$ ($-1.2r^2+17.8r+13.4$, $1.2r^2-17.8r+76.6$, 10.0), and
point $O_r$ (30.0, 60.0, 10.0), or
on the above straight lines. In this case, the refrigerant of the present disclosure has a refrigerating capacity ratio of 100% or more relative to that of R404A.

The refrigerant of the present disclosure may be a refrigerant (refrigerant A) comprising R1234yf, wherein when the mass% of HFO-1132(E), R1234yf, and CO2 based on their sum is respectively represented by x, y, and z, coordinates (x,y,z) in a ternary composition diagram in which the sum of HFO-1132(E), R1234yf, and $CO_2$ is 100 mass% are within the range of a figure surrounded by line segments $H_{r=0}I_{r=0}$, $I_{r=0}J_{r=0}$, $J_{r=0}J2_{r=0}$, $J2_{r=0}K2_{r=0}$, $K2_{r=0}K_{r=0}$, $K_{r=0}Q_{r=0}$, and $Q_{r=0}H_{r=0}$ that connect the following 7 points:

point $H_{r=0}$ (12.2, 87.8, 0.0),
point $I_{r=0}$ (0.0, 98.1, 1.9),
point $J_{r=0}$ (0.0, 94.8, 5.2),
point $J2_{r=0}$ (10.0, 85.4, 4.6),
point $K2_{r=0}$ (20.0, 75.1, 4.9),
point $K_{r=0}$ (30.0, 64.0, 6.0), and
point $Q_{r=0}$ (30.0, 70.0, 0.0), or
on the above line segments $H_{r=0}I_{r=0}$, $I_{r=0}J_{r=0}$, $J_{r=0}K_{r=0}$, and $K_{r=0}Q_{r=0}$ (excluding points $H_{r=0}$ and Qr=o) ;

line segments $I_{r=0}J_{r=0}$, $K_{r=0}Q_{r=0}$ and $Q_{r=0}H_{r=0}$ are straight lines;
the coordinates (x,y,z) of points on the line segment $H_{r=0}I_{r=0}$ are represented by (x, $-0.0013x^2-0.8279x+98.1$,

0.0013x$^2$-0.1721x+1.9);

the coordinates (x,y,z) of points on the line segment $J_{r=0}J2_{r=0}$ are represented by (x, -0.004x$^2$-0.9x+94.8, 0.004x$^2$-0.1x+5.2);

the coordinates (x,y,z) of points on the line segment $J2_{r=0}K2_{r=0}$ are represented by (x, -0.006x$^2$-0.85x+94.5, 0.006x$^2$-0.15x+5.5); and

the coordinates (x,y,z) of points on the line segment $K2_{r=0}K_{r=0}$ are represented by (x, -0.002x$^2$-1.01x+96.1, 0.002x$^2$+0.01x+3.9).

In this case, the refrigerant of the present disclosure has a boiling point of -40°C or lower and an evaporation glide of 15K or less. For the characteristics, the refrigerant is particularly suitable as a working fluid in air-conditioning equipment for electric vehicles.

The refrigerant of the present disclosure may be a refrigerant (refrigerant B) comprising R1234ze, wherein when the mass% of HFO-1132 (E), R1234ze and $CO_2$ based on their sum is respectively represented by x, y, and z, coordinates (x,y,z) in a ternary composition diagram in which the sum of HFO-1132(E), R1234ze, and $CO_2$ is 100 mass% are within the range of a figure surrounded by line segments $H_{r=1}I_{r=1}$, $I_{r=1}J_{r=1}$, $J_{r=1}J2_{r=1}$, $J2_{r=1}K2_{r=1}$, $K2_{r=1}K_{r=1}$, $K_{r=1}Q_{r=1}$, and $Q_{r=1}H_{r=1}$ that connect the following 7 points:

point $H_{r=1}$ (22.7, 77.3, 0.0),
point $I_{r=1}$ (0.0, 96.4, 3.6),
point $J_{r=1}$ (0.0, 96.1, 3.9),
point $J2_{r=1}$ (10.0, 87.6, 2.4),
point $K2_{r=1}$ (20.0, 78.1, 1.9),
point $K_{r=1}$ (30.0, 67.8, 2.2), and
point $Q_{r=1}$ (30.0, 70.0, 0.0), or
on the above line segments $H_{r=1}I_{r=1}$, $I_{r=1}J_{r=1}$, $J_{r=1}K_{r=1}$, and $K_{r=1}Q_{r=1}$ (excluding points $H_{r=1}$ and $Q_{r=1}$);

line segments $I_{r=1}J_{r=1}$, $K_{r=1}Q_{r=1}$, and $Q_{r=1}H_{r=1}$ are straight lines;

the coordinates (x,y,z) of points on the line segment $H_{r=1}I_{r=1}$ are represented by (x, -0.003x$^2$-0.7723x+96.4, 0.003x$^2$-0.2277x+3.6);

the coordinates (x,y,z) of points on the line segment $J_{r=1}J2_{r=1}$ are represented by (x, -0.006x$^2$-0.79x+96.1, 0.006x$^2$-0.21x+3.9);

the coordinates (x,y,z) of points on the line segment $J2_{r=1}K2_{r=1}$ are represented by (x, -0.002x$^2$-0.89x+96.7, 0.002x$^2$-0.11x+3.3); and

the coordinates (x,y,z) of points on the line segment $K2_{r=1}K_{r=1}$ are represented by (x, -0.002x$^2$-0.93x+97.5, 0.002x$^2$-0.07x+2.5) .

In this case, the refrigerant of the present disclosure has a boiling point of -40°C or lower and an evaporation glide of 15K or less. For the characteristics, the refrigerant is particularly suitable as a working fluid in air-conditioning equipment for electric vehicles.

The refrigerant of the present disclosure may be a refrigerant (refrigerant C), wherein

when a ratio of R1234ze to the sum of R1234yf and R1234ze is represented by r (0<r<1), and

when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by line segments $H_rI_r$, $I_rJ_r$, $J_rJ2_r$, $J2_rK2_r$, $K2_rK_r$, $K_rQ_r$, and $Q_rH_r$ that connect the following 7 points:

point $H_r$ (r$^2$+9.5r+12.2, -r$^2$-9.5r+87.8, 0.0),
point $I_r$ (0.0, -0.6r$^2$-1.1r+98.1, 0.6r$^2$+1.1r+1.9),
point $J_r$ (0.0, -0.6r$^2$+1.9r+94.8, 0.6r$^2$-1.9r+5.2),
point $J2_r$ (10.0, -0.4r$^2$+2.6r+85.4, 0.4r$^2$-2.6r+4.6),
point $K2_r$ (20.0, 3.0r+75.1, -3.0r+4.9),
point $K_r$ (30.0, -0.4r$^2$+4.2r+64.0, 0.4r$^2$-4.2r+6.0), and
point $Q_r$ (70.0, 30.0, 0.0), or
on the above line segments $H_rI_r$, $I_rJ_r$, $J_rK_r$, and $K_rQ_r$ (excluding points $H_r$ and $Q_r$);

the line segments $I_rJ_r$, $K_rQ_r$, and $Q_rH_r$ are straight lines;

the coordinates (x,y,z) of points on the line segment $H_rI_r$ are represented by (x, $(-0.003r^2+0.0013r-0.0013)x^2+$ $(0.102r^2-0.0464r-0.8279)x+(-0.6r^2-1.1r+98.1)$, $(0.003r^2-0.0013r+0.0013)x^2+(-0.102r^2+0.0464r-0.1721)$ $x+(0.6r^2+1.1r+1.9))$;

the coordinates (x,y,z) of points on the line segment $J_rJ2_r$ are represented by (x, $(0.0068r^2-0.0034r-0.004)x^2+$ $(0.06r^2+0.05r-0.9)x+(-0.6r^2+1.9r+94.8)$, $(0.004r^2-0.002r+0.004)x^2+(-0.06r^2-0.05r-0.1)x+(0.6r^2-1.9r+5.2))$;

the coordinates (x,y,z) of points on the line segment $J2_rK2_r$ are represented by (x, $(0.016r^2-0.012r-0.006)x^2$ $+(-0.44r^2+0.4r-0.85)x+(2.4r^2-0.2r+94.5)$, $(-0.016r^2+0.012r+0.006)x^2+(0.44r^2-0.4r-0.15)x+(-2.4r^2$ $+0.2r+5.5))$; and

the coordinates (x,y,z) of points on the line segment $K2_rK_r$ are represented by (x, $(0.008r^2-0.008r-0.002)x^2$ $+(-0.44r^2+0.52r-1.01)x+(5.6r^2-4.2r+96.1)$, $(-0.008r^2+0.008r+0.002)x^2+(0.44r^2-0.52r+0.01)x+(-5.6r^2$ $+4.2r+3.9))$). In this case, the refrigerant of the present disclosure has a boiling point of -40°C or lower and an evaporation glide of 15K or less. For the characteristics, the refrigerant is particularly suitable as a working fluid in air-conditioning equipment for electric vehicles.

In addition, since each of refrigerant A, refrigerant B, and refrigerant C has a boiling point of -40.0°C or lower, there is an advantage that the refrigerant is easy to use in heating by a heat pump. For example, when the refrigerant of the present disclosure is used for operating a refrigeration cycle of air-conditioning equipment for vehicles, there is an advantage that heating can be performed by a heat pump that consumes less power than an electric heater. Examples of the "air-conditioning equipment for vehicles include systems for gasoline vehicles, hybrid vehicles, electric vehicles, and hydrogen vehicles.

The refrigerant of the present disclosure may further comprise other additional refrigerants in addition to HFO-1132(E), R1234yf, R1234ze and $CO_2$ as long as the above properties and effects are not impaired. In this respect, the refrigerant of the present disclosure preferably comprises HFO-1132(E), R1234yf, R1234ze and $CO_2$ in a total amount of 99.5 mass% or more, more preferably 99.75 mass% or more, still more preferably 99.9 mass% or more, based on the entire refrigerant.

Additional refrigerants are not limited and can be widely selected. The mixed refrigerant may contain one additional refrigerant, or two or more additional refrigerants.

Examples of the additional refrigerant include acetylene, HFO-1132a, HFO-1141, HFO-1123, HFC-143a, HFC-134a, Z-HFO-1132, HFC-152a, HFC-161, HFO-1243zf, HFC-245cb, HCFC-1122, HCFC-124, CFC-1113, and 3,3,3-trifluoropropyne.

The total amount of the additional refrigerant is preferably 0.5 mass% or less, more preferably 0.25 mass% or less, still more preferably 0.1 mass% or less, and most preferably 0.01 mass% or less, based on the entire refrigerant.

1.2. Use

The refrigerant of the present disclosure can be preferably used as a working fluid in a refrigerating machine.

The composition of the present disclosure is suitable for use as an alternative refrigerant for R404A in certain embodiments described above.

The composition of the present disclosure is suitable for use as a refrigerant for air-conditioning equipment for electric vehicles in certain embodiments described above.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

2.2. Tracer

A tracer is added to the refrigerant composition according to the present disclosure at a detectable concentration so that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers. It is preferable that a compound that cannot be an impurity inevitably mixed into the refrigerant of the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a fluorocarbon, a hydrochlorocarbon, a fluorocarbon, or a fluoroether.

Specifically, the following compounds are preferable as the above tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3F$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The tracer compound can be present in the refrigerant composition at a total concentration of about 10 parts per million by weight (ppm) to about 1000 ppm. The tracer compound is preferably present in the refrigerant composition at a total concentration of about 30 ppm to about 500 ppm, and most preferably at a total concentration of about 50 ppm to about 300 ppm.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

### 3. Refrigeration-Oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally comprises 10 to 50 mass% of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt or more at 40°C is preferable from the standpoint of lubrication.

The refrigeration-oil-containing working fluid according to the present disclosure may further optionally contain at least one additive. Examples of additives include compatibilizing agents described below.

3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

The embodiments are described above; however, it will be understood that various changes in form and detail can be made without departing from the spirit and scope of the claims.

Examples

The present disclosure is described in more detail below with reference to Examples. However, the present disclosure is not limited to the Examples.

Mixed refrigerants were prepared by mixing HFO-1132(E), R-1234yf, and R-1234ze at mass% based on their sum shown in Table 1.

Each of these mixed refrigerants was examined for disproportionation reactions under the following test methods and conditions.

Test Method

A mixed refrigerant to be tested was transferred into a test container and heated to 150°C, and then a voltage was applied to a Pt wire in the container to fuse the wire, thereby applying energy of 30 J to the mixed refrigerant. The occurrence of the disproportionation reaction was determined by a rapid increase in pressure and temperature in the apparatus.

Test Conditions

Test container: 38 cc, made of stainless steel (SUS)
Test temperature: 150°C
Pressure: 3 MPa

Evaluation Criteria

"Non-explosion": the temperature or pressure after the fusion of the Pt wire is less than 2 times, and no rapid disproportionation reaction occurs.

"Explosion": the temperature or pressure after the fusion of the Pt wire reaches twice or more and a rapid disproportionation reaction occurs.

[Table 1]

| Item | Unit | Experiment series 1 | | | Experiment series 2 | | |
|---|---|---|---|---|---|---|---|
| HFO-1132(E) | mass% | 46.0 | 44.0 | 42.0 | 46.0 | 44.0 | 42.0 |

(continued)

| Item | Unit | Experiment series 1 | | | Experiment series 2 | | |
|---|---|---|---|---|---|---|---|
| R-1234yf | mass% | 54.0 | 56.0 | 58.0 | 0.0 | 0.0 | 0.0 |
| R-1234ze | mass% | 0.0 | 0.0 | 0.0 | 54.0 | 56.0 | 58.0 |
| Disproportionation reaction (3MPa) | - | Explosion | Non-explosion | Non-explosion | Explosion | Non-explosion | Non-explosion |

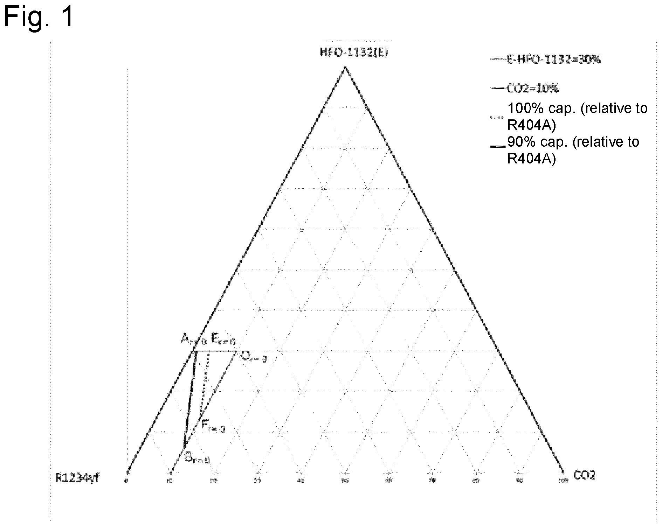

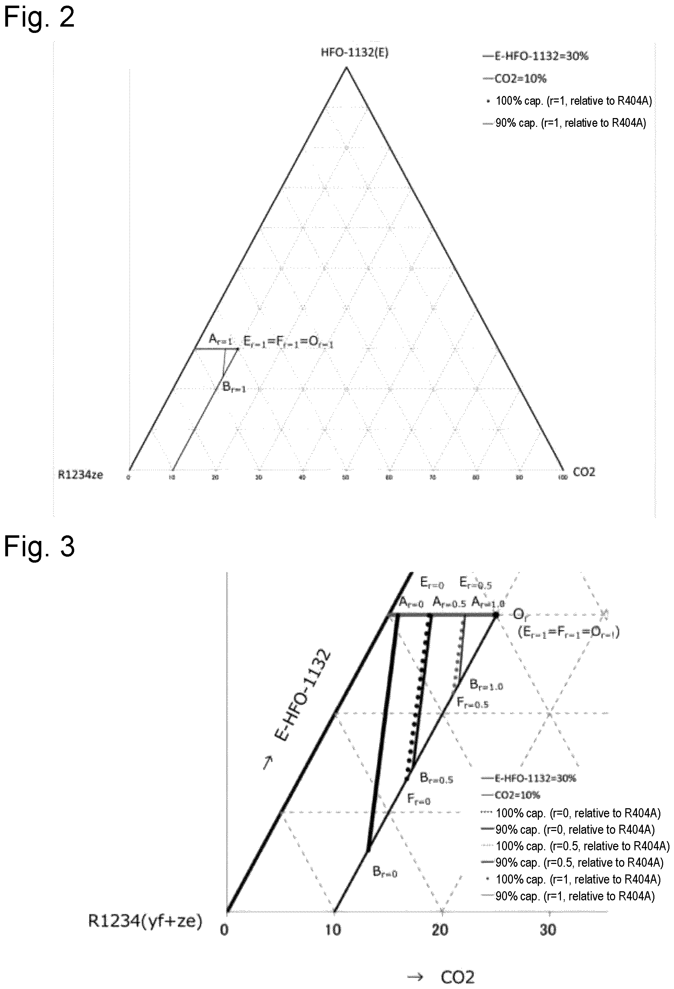

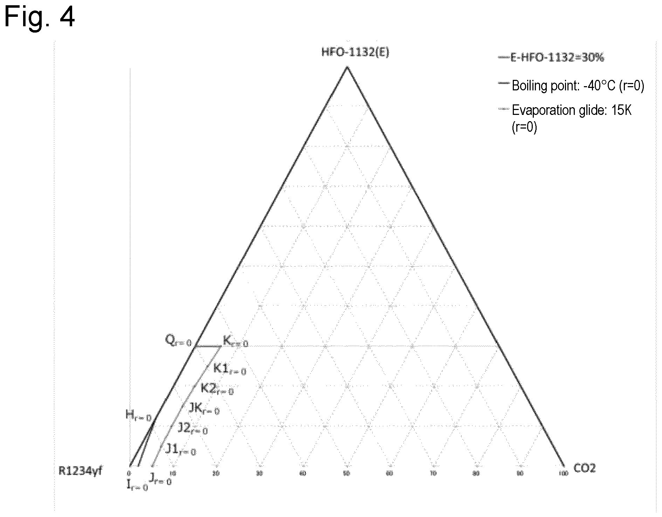

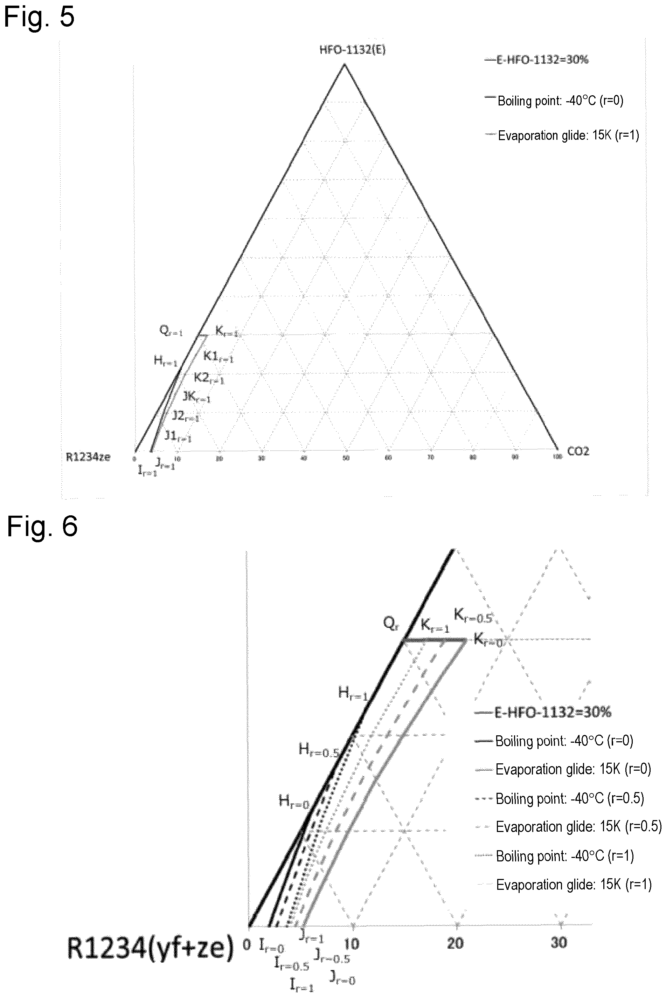

The results in Table 1 indicate that the refrigerant of the present disclosure does not undergo disproportionation in the region shown in the ternary diagrams of Figs. 1 to 6.

Mixed refrigerants were prepared by mixing HFO-1132(E), R-1234yf, R-1234ze, and $CO_2$ at mass% based on their sum shown in Tables 1 to 6.

The GWP of each mixed refrigerant was evaluated based on the values stated in the Intergovernmental Panel on Climate Change (IPCC), fourth report. The GWP of HFO-1132(E), which was not stated in the report, was assumed to be 1 from HFO-1132a (GWP = 1 or less) and HFO-1123 (GWP = 0.3, described in PTL 1).

The discharge pressure, condensation glide, coefficient of performance (COP) ratio relative to that of R404A, and refrigerating capacity ratio of the mixed refrigerants in Tables 1 to 4 were each determined. The cycle performance of each mixed refrigerant was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.
The physical property data of HFO-1132(E) were determined from measured values.

Evaporation temperature: -40°C

Condensation temperature: 40°C

Superheating temperature: 20K

Subcooling temperature: 0K

$E_{comp}$ (compressive modulus) : 0.7 kWh

Tables 1 to 4 show the evaluation results together with the GWP of each mixed refrigerant.

[Table 2]

| Item | Unit | Comp. Ex.1 | Ex.1 $A_{r=0}$ | Ex.2 $B_{r=0}$ | Ex.3 $E_{r=0}$ | Ex.4 $F_{r=0}$ | Ex.5 $O_{r=0}$ |
|---|---|---|---|---|---|---|---|
| E-HFO-1132 | mass% | R404A | 30.0 | 6.2 | 30.0 | 13.4 | 30.0 |
| R1234yf | mass% | | 69.1 | 83.8 | 66.2 | 76.6 | 60.0 |
| 1234ze | mass% | | 0.0 | 0.0 | 0.0 | 0.0 | 0.0 |
| CO2 | mass% | | 0.9 | 10.0 | 3.8 | 10.0 | 10.0 |
| GWP | - | 3922 | 3 | 4 | 3 | 3 | 3 |
| COP ratio | % (relative to R404A) | 100 | 105 | 105 | 104 | 104 | 102 |
| Refrigerating capacity ratio | % (relative to R404A) | 100 | 90 | 90 | 100 | 100 | 122 |
| Discharge pressure | Mpa | 1.82 | 1.66 | 1.86 | 1.86 | 2.00 | 2.32 |
| Condensation glide | K | 0.3 | 7.1 | 21.9 | 11.2 | 20.8 | 17.3 |

(continued)

| Item | Unit | Comp. Ex.1 | Ex.6 | Ex. 7 | Ex. 8 | | |
| --- | --- | --- | --- | --- | --- | --- | --- |
| | | | $A_{r=1}$ | $B_{r=1}$ | Or-1 | | |
| E-HFO-1132 | mass% | R404A | 30.0 | 23.1 | 30.0 | | |
| R1234yf | mass% | | 0.0 | 0.0 | 0.0 | | |
| 1234ze | mass% | | 62.9 | 66.9 | 60.0 | | |
| $CO_2$ | mass% | | 7.1 | 10.0 | 10.0 | | |
| GWP | - | 3922 | 4 | 4 | 4 | | |
| COP ratio | % (relative to R404A) | 100 | 107 | 107 | 106 | | |
| Refrigerating capacity ratio | % (relative to R404A) | 100 | 90 | 90 | 100 | | |
| Discharge pressure | Mpa | 1.82 | 1.83 | 1.89 | 2.03 | | |
| Condensation glide | K | 0.3 | 20.4 | 24.4 | 22.7 | | |
| Item | Unit | Comp. Ex.1 | Ex.9 | Ex.10 | Ex.11 | Ex.12 | Ex.13 |
| | | | $A_{r=0.5}$ | $B_{r=0.5}$ | $E_{r=0.5}$ | $F_{r=0.5}$ | $O_{r=0.5}$ |
| E-HFO-1132 | mass% | R404A | 30.0 | 14.6 | 30.0 | 22.0 | 30.0 |
| R1234yf | mass% | | 33.0 | 37.7 | 31.5 | 34.0 | 30.0 |
| 1234ze | mass% | | 33.0 | 37.7 | 31.5 | 34.0 | 30.0 |
| $CO_2$ | mass% | | 4.0 | 10.0 | 7.0 | 10.0 | 10.0 |
| GWP | - | 3922 | 4 | 4 | 4 | 4 | 3 |
| COP ratio | % (relative to R404A) | 100 | 106 | 106 | 105 | 105 | 104 |
| Refrigerating capacity ratio | % (relative to R404A) | 100 | 90 | 90 | 100 | 100 | 111 |
| Discharge pressure | Mpa | 1.82 | 1.76 | 1.89 | 1.97 | 2.03 | 2.19 |
| Condensation glide | K | 0.3 | 14.0 | 23.2 | 17.4 | 21.7 | 19.9 |

[Table 3]

| r= R 1234ze/(R 1234ze+ R 1234yf)=0 | | | | | | | | | |
| --- | --- | --- | --- | --- | --- | --- | --- | --- | --- |
| Item | Unit | Comp. Ex.2 | Ex.14 | Ex.15 | Ex.16 | Comp. Ex.3 | Comp. Ex.4 | Ex.17 | Ex.18 |
| E-HFO-1132 | mass% | 10.0 | 10.0 | 10.0 | 10.0 | 10.0 | 20.0 | 20.0 | 20.0 |
| R1234(ze+yf) | mass% | 90.0 | 87.5 | 85.0 | 80.0 | 77.5 | 80.0 | 77.5 | 75.0 |
| $CO_2$ | mass% | 0.0 | 2.5 | 5.0 | 10.0 | 12.5 | 0.0 | 2.5 | 5.0 |
| GWP | - | 4 | 4 | 4 | 3 | 3 | 3 | 3 | 3 |
| COP ratio | % (relative to R404A) | 106 | 106 | 105 | 104 | 104 | 106 | 105 | 105 |
| Refrigerating capacity ratio | % (relative to R404A) | 64 | 71 | 79 | 95 | 104 | 76 | 83 | 92 |
| Discharge pressure | Mpa | 1.24 | 1.41 | 1.58 | 1.93 | 2.11 | 1.42 | 1.60 | 1.77 |
| Condensation glide | K | 4.7 | 10.0 | 14.6 | 21.4 | 23.7 | 5.9 | 10.3 | 14.0 |

| r=R1234ze/(R1234ze+R1234yf)=0 | | | | | | | | |
|---|---|---|---|---|---|---|---|---|
| Item | Unit | Ex.19 | Comp. Ex.5 | Comp. Ex.6 | Ex.20 | Ex.21 | Ex.22 | Comp. Ex. 7 |
| E-HFO-1132 | mass% | 20.0 | 20.0 | 30.0 | 30.0 | 30.0 | 30.0 | 30.0 |
| R1234(ze+yf) | mass% | 70.0 | 67.5 | 70.0 | 67.5 | 65.0 | 60.0 | 57.5 |
| CO2 | mass% | 10.0 | 12.5 | 0.0 | 2.5 | 5.0 | 10.0 | 12.5 |
| GWP | - | 3 | 3 | 3 | 3 | 3 | 3 | 3 |
| COP ratio | % (relative to R404A) | 103 | 102 | 105 | 105 | 104 | 102 | 101 |
| Refrigerating capacity ratio | % (relative to R404A) | 109 | 118 | 87 | 95 | 104 | 122 | 131 |
| Discharge pressure | Mpa | 2.13 | 2.31 | 1.59 | 1.77 | 1.95 | 2.32 | 2.50 |
| Condensation glide | K | 19.5 | 21.3 | 5.7 | 9.5 | 12.7 | 17.3 | 18.8 |

| r=R1234ze/(R1234ze+R1234yf)=1 | | | | | | | | | |
|---|---|---|---|---|---|---|---|---|---|
| Item | Unit | Comp. Ex.8 | Ex.23 | Ex.24 | Ex.25 | Comp. Ex.9 | Comp. Ex. 10 | Ex.26 | Ex.27 |
| E-HFO-1132 | mass% | 10.0 | 10.0 | 10.0 | 10.0 | 10.0 | 20.0 | 20.0 | 20.0 |
| R1234(ze+yf) | mass% | 90.0 | 87.5 | 85.0 | 80.0 | 77.5 | 80.0 | 77.5 | 75.0 |
| CO2 | mass% | 0.0 | 2.5 | 5.0 | 10.0 | 12.5 | 0.0 | 2.5 | 5.0 |
| GWP | - | 6 | 5 | 5 | 5 | 5 | 5 | 5 | 5 |
| COP ratio | % (relative to R404A) | 112 | 111 | 110 | 109 | 108 | 111 | 110 | 109 |
| Refrigerating capacity ratio | % (relative to R404A) | 46 | 52 | 58 | 72 | 79 | 57 | 64 | 71 |
| Discharge pressure | Mpa | 0.98 | 1.15 | 1.31 | 1.63 | 1.78 | 1.17 | 1.34 | 1.50 |
| Condensation glide | K | 7.3 | 14.3 | 19.6 | 26.7 | 29.0 | 9.7 | 15.2 | 19.5 |

| r=R1234ze/(R1234ze+R1234yf)=1 | | | | | | | |
|---|---|---|---|---|---|---|---|
| Item | Unit | Ex.28 | Comp. Ex.5 | Comp. Ex. 11 | Ex.29 | Ex.30 | Comp. Ex. 12 |
| E-HFO-1132 | mass% | 20.0 | 20.0 | 30.0 | 30.0 | 30.0 | 30.0 |
| R1234(ze+yf) | mass% | 70.0 | 67.5 | 70.0 | 67.5 | 65.0 | 57.5 |
| CO2 | mass% | 10.0 | 12.5 | 0.0 | 2.5 | 5.0 | 12.5 |
| GWP | - | 5 | 4 | 5 | 4 | 4 | 4 |
| COP ratio | % (relative to R404A) | 107 | 107 | 110 | 109 | 108 | 105 |
| Refrigerating capacity ratio | % (relative to R404A) | 86 | 94 | 68 | 76 | 83 | 108 |
| Discharge pressure | Mpa | 1.83 | 1.99 | 1.34 | 1.52 | 1.69 | 2.20 |
| Condensation glide | K | 25.1 | 26.9 | 9.9 | 14.6 | 18.1 | 24.1 |

[Table 4]

| r=R1234ze/(R1234ze+R1234yf)=0.25 | | | | | | | | | |
|---|---|---|---|---|---|---|---|---|---|
| Item | Unit | Comp. Ex. 13 | Ex.31 | Ex.32 | Ex.33 | Comp. Ex. 14 | Comp. Ex. 15 | Ex.34 | Ex.35 |
| E-HFO-1132 | mass% | 10.0 | 10.0 | 10.0 | 10.0 | 10.0 | 20.0 | 20.0 | 20.0 |
| R1234(ze+yf) | mass% | 90.0 | 87.5 | 85.0 | 80.0 | 77.5 | 80.0 | 77.5 | 75.0 |
| CO2 | mass% | 0.0 | 2.5 | 5.0 | 10.0 | 12.5 | 0.0 | 2.5 | 5.0 |
| GWP | - | 4 | 4 | 4 | 4 | 4 | 4 | 4 | 4 |
| COP ratio | % (relative to R404A) | 107 | 107 | 106 | 105 | 104 | 107 | 106 | 106 |
| Refrigerating capacity ratio | % (relative to R404A) | 60 | 67 | 74 | 90 | 98 | 71 | 79 | 86 |
| Discharge pressure | Mpa | 1.18 | 1.35 | 1.52 | 1.87 | 2.04 | 1.36 | 1.54 | 1.71 |
| Condensation glide | K | 5.2 | 10.8 | 15.6 | 22.5 | 24.8 | 6.6 | 11.3 | 15.2 |

| r=R1234ze/(R1234ze+R1234yf)=0.25 | | | | | | | | |
|---|---|---|---|---|---|---|---|---|
| Item | Unit | Ex.36 | Comp. Ex. 16 | Comp. Ex.17 | Ex.37 | Ex.38 | Ex.39 | Comp. Ex. 18 |
| E-HFO-1132 | mass% | 20.0 | 20.0 | 30.0 | 30.0 | 30.0 | 30.0 | 30.0 |
| R1234(ze+yf) | mass% | 70.0 | 67.5 | 70.0 | 67.5 | 65.0 | 60.0 | 57.5 |
| CO2 | mass% | 10.0 | 12.5 | 0.0 | 2.5 | 5.0 | 10.0 | 12.5 |
| GWP | - | 3 | 3 | 3 | 3 | 3 | 3 | 3 |
| COP ratio | % (relative to R404A) | 104 | 103 | 107 | 106 | 105 | 103 | 102 |
| Refrigerating capacity ratio | % (relative to R404A) | 103 | 112 | 83 | 91 | 99 | 116 | 125 |
| Discharge pressure | Mpa | 2.07 | 2.24 | 1.53 | 1.71 | 1.89 | 2.25 | 2.43 |
| Condensation glide | K | 20.7 | 22.5 | 6.5 | 10.5 | 13.9 | 18.5 | 20.0 |

| r=R1234ze/(R1234ze+R1234yf)=0.5 | | | | | | | | | |
|---|---|---|---|---|---|---|---|---|---|
| Item | Unit | Comp. Ex. 19 | Ex.40 | Ex.41 | Ex.42 | Comp. Ex.20 | Comp. Ex.21 | Ex.43 | Ex.44 |
| E-HFO-1132 | mass% | 10.0 | 10.0 | 10.0 | 10.0 | 10.0 | 20.0 | 20.0 | 20.0 |
| R1234(ze+yf) | mass% | 90.0 | 87.5 | 85.0 | 80.0 | 77.5 | 80.0 | 77.5 | 75.0 |
| CO2 | mass% | 0.0 | 2.5 | 5.0 | 10.0 | 12.5 | 0.0 | 2.5 | 5.0 |
| GWP | - | 5 | 5 | 4 | 4 | 4 | 4 | 4 | 4 |
| COP ratio | % (relative to R404A) | 109 | 108 | 108 | 106 | 105 | 108 | 107 | 107 |
| Refrigerating capacity ratio | % (relative to R404A) | 55 | 62 | 69 | 84 | 92 | 66 | 74 | 81 |

(continued)

| r=R1234ze/(R1234ze+R1234yf)=0.5 | | | | | | | | | |
|---|---|---|---|---|---|---|---|---|---|
| Item | Unit | Comp. Ex. 19 | Ex.40 | Ex.41 | Ex.42 | Comp. Ex.20 | Comp. Ex.21 | Ex.43 | Ex.44 |
| Discharge pressure | Mpa | 1.12 | 1.29 | 1.46 | 1.80 | 1.96 | 1.30 | 1.47 | 1.65 |
| Condensation glide | K | 6.0 | 12.0 | 17.0 | 24.0 | 26.2 | 7.6 | 12.5 | 16.6 |

| r=R1234ze/(R1234ze+R1234yf)=0.5 | | | | | | | | |
|---|---|---|---|---|---|---|---|---|
| Item | Unit | Ex.45 | Comp. Ex.22 | Comp. Ex.23 | Ex.46 | Ex.47 | Ex.48 | Comp. Ex.24 |
| E-HFO-1132 | mass% | 20.0 | 20.0 | 30.0 | 30.0 | 30.0 | 30.0 | 30.0 |
| R1234(ze+yf) | mass% | 70.0 | 67.5 | 70.0 | 67.5 | 65.0 | 60.0 | 57.5 |
| $CO_2$ | mass% | 10.0 | 12.5 | 0.0 | 2.5 | 5.0 | 10.0 | 12.5 |
| GWP | - | 4 | 4 | 4 | 4 | 4 | 3 | 3 |
| COP ratio | % (relative to R404A) | 105 | 104 | 108 | 107 | 106 | 104 | 103 |
| Refrigerating capacity ratio | % (relative to R404A) | 97 | 106 | 78 | 86 | 94 | 111 | 119 |
| Discharge pressure | Mpa | 2.00 | 2.17 | 1.47 | 1.65 | 1.83 | 2.19 | 2.36 |
| Condensation glide | K | 22.2 | 23.9 | 7.6 | 11.8 | 15.2 | 19.9 | 21.3 |

[Table 5]

| r=R1234ze/(R1234ze+R1234yf)=0.75 | | | | | | | | | |
|---|---|---|---|---|---|---|---|---|---|
| Item | Unit | Comp. Ex.25 | Ex.49 | Ex.50 | Ex.51 | Comp. Ex.26 | Comp. Ex.27 | Ex.52 | Ex.53 |
| E-HFO-1132 | mass% | 10.0 | 10.0 | 10.0 | 10.0 | 10.0 | 20.0 | 20.0 | 20.0 |
| R1234(ze+yf) | mass% | 90.0 | 87.5 | 85.0 | 80.0 | 77.5 | 80.0 | 77.5 | 75.0 |
| $CO_2$ | mass% | 0.0 | 2.5 | 5.0 | 10.0 | 12.5 | 0.0 | 2.5 | 5.0 |
| GWP | - | 5 | 5 | 5 | 5 | 4 | 5 | 4 | 4 |
| COP ratio | % (relative to R404A) | 110 | 110 | 109 | 107 | 107 | 109 | 109 | 108 |
| Refrigerating capacity ratio | % (relative to R404A) | 51 | 57 | 64 | 78 | 85 | 62 | 69 | 76 |
| Discharge pressure | Mpa | 1.05 | 1.22 | 1.39 | 1.72 | 1.88 | 1.23 | 1.41 | 1.58 |
| Condensation glide | K | 6.7 | 13.2 | 18.4 | 25.5 | 27.7 | 8.6 | 13.9 | 18.1 |

| r=R1234ze/(R1234ze+R1234yf)=0.75 | | | | | | | | |
|---|---|---|---|---|---|---|---|---|
| Item | Unit | Ex.54 | Comp. Ex.28 | Comp. Ex.29 | Ex.55 | Ex.56 | Ex.57 | Comp. Ex.30 |
| E-HFO-1132 | mass% | 20.0 | 20.0 | 30.0 | 30.0 | 30.0 | 30.0 | 30.0 |
| R1234(ze+yf) | mass% | 70.0 | 67.5 | 70.0 | 67.5 | 65.0 | 60.0 | 57.5 |
| CO2 | mass% | 10.0 | 12.5 | 0.0 | 2.5 | 5.0 | 10.0 | 12.5 |
| GWP | - | 4 | 4 | 4 | 4 | 4 | 4 | 4 |
| COP ratio | % (relative to R404A) | 106 | 105 | 109 | 108 | 107 | 105 | 104 |
| Refrigerating capacity ratio | % (relative to R404A) | 91 | 100 | 73 | 81 | 88 | 105 | 114 |
| Discharge pressure | Mpa | 1.92 | 2.08 | 1.40 | 1.58 | 1.76 | 2.11 | 2.28 |
| Condensation glide | K | 23.7 | 25.4 | 8.7 | 13.2 | 16.7 | 21.3 | 22.7 |

The COP, refrigerating capacity, discharge temperature, and boiling point of mixed refrigerants in Tables 5 and 6 were determined by performing theoretical refrigeration cycle calculations for the mixed refrigerants using the National Institute of Science and Technology (NIST) and Reference Fluid Thermodynamic and Transport Properties Database (Refprop 9.0) under the following conditions. The physical property data of HFO-1132 (E) were determined from measured values.

Evaporation temperature: -30°C
Condensation temperature: 30°C
Superheating temperature: 5K
Subcooling temperature: 5K
Compressor efficiency: 70%

In the following tables, "COP ratio" and "refrigerating capacity ratio" each indicate a proportion (%) relative to R1234yf.
In the tables, "boiling point (°C)" indicates the temperature at which a liquid phase of the mixed refrigerant reaches atmospheric pressure (101.33 kPa). In the table, "power consumption (%) of driving force" indicate electric energy used for traveling an electric vehicle and is expressed as a ratio of power consumption when the refrigerant is HFO-1234yf. In the tables, "power consumption (%) for heating" indicates electric energy used by an electric vehicle to operate heating and is expressed as a ratio of power consumption when the refrigerant is HFO-1234yf.
In the following tables, "possible travel distance (with heating)" represents a relative proportion (%) of the distance that can be traveled by an electric vehicle equipped with a secondary battery with a certain electric capacity while having a heater turned on if possible travel distance (without heating) is set to 100% when the vehicle is driven without heating (power consumption for heating is 0).
For the heating method, an electric heater system was used for heating for the refrigerant having a boiling point of higher than -40°C, and a heat pump system was used for heating for the refrigerant having a boiling point of -40°C or lower.
The power consumption during heating was determined based on the following equation. The heating COP means "heating efficiency".

```
Power consumption during heating = heating capacity/heating COP
```

Regarding heating efficiency, in the case of an electric heater, the heating COP = 1, and electrodes equivalent to driving force are consumed for heating. In other words, the power consumption for heating is E = E/(1+COP).
On the other hand, in the case of a heat pump, the heating COP was also determined by theoretical refrigeration cycle calculations for the mixed refrigerants using Refprop 9.0 (manufactured by NIST) under the following conditions.

Evaporation temperature: -30°C

Condensation temperature: 30°C
Superheating temperature: 5K
Subcooling temperature: 5K
Compressor efficiency: 70%

The possible travel distance was determined according to the following equation.

possible travel distance= (battery capacity)/(power consumption of driving force + power consumption for heating)

These values, together with the GWP for each mixed refrigerant, are shown in the following tables. The specific COP and specific refrigerating capacity are shown as a proportion relative to HFO-1234y.

The coefficient of performance (COP) was determined according to the following equation.

COP = (refrigerating capacity or heating capacity)/power consumption

[Table 6]

| Item | | Unit | Ref. Ex.1 | Comp. Ex.31 | Comp. Ex.32 $H_{r=0}$ | Ex.58 $HI_{r=0}$ | Comp. Ex.33 $I_{r=0}$ | Ex.59 $K_{r=0}$ | Ex.60 $K1_{r=0}$ | Ex.61 $K2_{r=0}$ | Ex.62 $KJ_{r=0}$ | Ex.63 $J2_{r=0}$ | Ex.64 $J1_{r=0}$ | Ex.65 $J_{r=0}$ | Comp. Ex.34 $L_{r=0}$ | Ex.66 $LM_{r=0}$ | Ex.67 $M_{r=0}$ | Comp. Ex.34 $Q_{r=0}$ |
|---|---|---|---|---|---|---|---|---|---|---|---|---|---|---|---|---|---|---|
| Proportion of formulations | E-HFO-1132 | mass% | 0.0 | 0.0 | 12.2 | 6.1 | 0.0 | 30.0 | 25.0 | 20.0 | 15.0 | 10.0 | 5.0 | 0.0 | 22.4 | 15.6 | 9.1 | 30.0 |
| | R1234(yf+ze) | mass% | 0.0 | 100.0 | 87.8 | 93.0 | 98.1 | 64.0 | 69.6 | 75.1 | 80.4 | 85.4 | 90.2 | 94.8 | 77.6 | 82.1 | 86.3 | 70.0 |
| | CO2 | mass% | 0.0 | 0.0 | 0.0 | 0.9 | 1.9 | 6.0 | 5.4 | 4.9 | 4.6 | 4.6 | 4.8 | 5.2 | 0.0 | 2.3 | 4.6 | 0.0 |
| | R1234yf | mass% | 0.0 | 100.0 | 87.8 | 93.0 | 98.1 | 64.0 | 69.6 | 75.1 | 80.4 | 85.4 | 90.2 | 94.8 | 77.6 | 82.1 | 86.3 | 70.0 |
| | R134a | mass% | 100.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| GWP(AR4) | | - | 1430 | 4 | 4 | 4 | 4 | 3 | 3 | 3 | 3 | 4 | 4 | 4 | 3 | 3 | 4 | 3 |
| COP ratio (relative to R1234yf) | | % | 105 | 100 | 100 | 100 | 99 | 98 | 99 | 99 | 99 | 99 | 99 | 99 | 100 | 100 | 99 | 100 |
| Refrigerating capacity ratio (relative to R1234yf) | | % | 99 | 100 | 128 | 119 | 111 | 208 | 193 | 178 | 164 | 152 | 141 | 131 | 150 | 150 | 150 | 165 |
| Power consumption of driving force | | % | 100 | 100 | 100 | 100 | 100 | 100 | 100 | 100 | 100 | 100 | 100 | 100 | 100 | 100 | 100 | 100 |
| Power consumption for heating | | % | 95 | 100 | 33 | 33 | 33 | 33 | 33 | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 | 100 | 100 | 100 | 100 | 100 | 100 | 100 |
| Possible travel distance (with heating) | | % | 50 | 50 | 84 | 84 | 84 | 84 | 84 | 84 | 84 | 84 | 84 | 84 | 84 | 84 | 84 | 84 |
| Boiling point | | °C | -26.1 | -29.5 | -40.0 | -40.0 | -40.0 | -61.2 | -59.5 | -57.7 | -56.1 | -55.0 | -54.2 | -53.5 | -44.0 | -49.9 | -54.8 | -45.9 |
| Condensation glide | | K | 0.0 | 0.0 | 5.4 | 6.1 | 6.1 | 15.0 | 15.0 | 15.0 | 15.0 | 15.0 | 15.0 | 15.0 | 6.3 | 10.8 | 15.0 | 6.0 |
| Heating method | | System | Electric heater | Electric heater | Heat pump | Heat pump | Heat pump | Heat pump | Heat pump | Heat pump | Heat pump | Heat pump | Heat pump | Heat pump | Heat pump | Heat pump | Heat pump | Heat pump |

| Item | | Unit | Ref. Ex.1 | Comp. Ex.31 | Comp. Ex.36 $H_{r=1}$ | Ex.68 $HI_{r=1}$ | Comp. Ex.37 $I_{r=1}$ | Ex.69 $K_{r=1}$ | Ex.70 $K1_{r=1}$ | Ex.71 $K2_{r=1}$ | Ex.72 $KJ_{r=1}$ | Ex.73 $J2_{r=1}$ | Ex.74 $J1_{r=1}$ | Comp. Ex.38 $J_{r=1}$ | Comp. Ex.39 $Q_{r=1}$ |
|---|---|---|---|---|---|---|---|---|---|---|---|---|---|---|---|
| Proportion of formulations | E-HFO-1132 | mass% | 0.0 | 0.0 | 22.7 | 11.4 | 0.0 | 30.0 | 25.0 | 20.0 | 15.0 | 10.0 | 5.0 | 0.0 | 30.0 |
| | R1234(yf+ze) | mass% | 0.0 | 100.0 | 77.3 | 87.2 | 96.4 | 67.8 | 73.0 | 78.1 | 82.9 | 87.6 | 92.0 | 96.1 | 70.0 |
| | CO2 | mass% | 0.0 | 0.0 | 0.0 | 1.4 | 3.6 | 2.2 | 2.0 | 1.9 | 2.1 | 2.4 | 3.0 | 3.9 | 0.0 |
| | R1234yf | mass% | 0.0 | 100.0 | 0.0 | 0.0 | 0.0 | 0.0 | 0.0 | 0.0 | 0.0 | 0.0 | 0.0 | 0.0 | 0.0 |
| | R134a | mass% | 100.0 | 0.0 | 0.0 | 0.0 | 0.0 | 0.0 | 0.0 | 0.0 | 0.0 | 0.0 | 0.0 | 0.0 | 0.0 |
| GWP(AR4) | | - | 1430 | 4 | 5 | 5 | 6 | 4 | 5 | 5 | 5 | 5 | 6 | 6 | 5 |
| COP ratio (relative to R1234yf) | | % | 105 | 100 | 103 | 103 | 102 | 102 | 102 | 103 | 102 | 102 | 102 | 102 | 103 |
| Refrigerating capacity ratio (relative to R1234yf) | | % | 99 | 100 | 119 | 102 | 88 | 148 | 136 | 124 | 114 | 104 | 96 | 90 | 134 |
| Power consumption of driving force | | % | 100 | 100 | 100 | 100 | 100 | 100 | 100 | 100 | 100 | 100 | 100 | 100 | 100 |
| Power consumption for heating | | % | 95 | 100 | 33 | 33 | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 | 100 | 100 | 100 | 100 |
| Possible travel distance (with heating) | | % | 50 | 50 | 84 | 84 | 84 | 84 | 84 | 84 | 84 | 84 | 84 | 84 | 84 |
| Boiling point | | °C | -26.1 | -29.5 | -40.0 | -40.0 | -40.0 | -49.9 | -48.0 | -46.1 | -44.8 | -43.3 | -42.3 | -41.5 | -42.6 |
| Condensation glide | | K | 0.0 | 0.0 | 10.5 | 12.6 | 14.1 | 15.0 | 15.0 | 15.0 | 15.0 | 15.0 | 15.0 | 15.0 | 15.0 |
| Heating method | | System | Electric heater | Electric heater | Heat pump | Heat pump | Heat pump | Heat pump | Heat pump | Heat pump | Heat pump | Heat pump | Heat pump | Heat pump | Heat pump |

| Item | | Unit | Ref. Ex.1 | Comp. Ex.31 | Comp. Ex.40 H r=0.5 | Ex.75 HI r=0.5 | Comp. Ex.41 I r=0.5 | Ex.76 K r=0.5 | Ex.77 K1 r=0.5 | Ex.78 K2 r=0.5 | Ex.79 KJ r=0.5 | Ex.80 J2 r=0.5 | Ex.81 J1 r=0.5 | Comp. Ex.46 J r=0.5 | Comp. Ex.42 L r=0.5 | Ex.82 LM r=0.5 | Ex.83 M r=0.5 | Comp. Ex.43 Q r=0.5 |
|---|---|---|---|---|---|---|---|---|---|---|---|---|---|---|---|---|---|---|
| Proportion of formulations | E-HFO-1132 | mass% | 0.0 | 0.0 | 17.2 | 8.6 | 0.0 | 30.0 | 25.0 | 20.0 | 15.0 | 10.0 | 5.0 | 0.0 | 30.0 | 25.0 | 19.9 | 30.0 |
| | R1234(yf+ze) | mass% | 0.0 | 100.0 | 82.8 | 90.2 | 97.4 | 66.0 | 71.4 | 76.6 | 81.8 | 86.6 | 91.2 | 95.6 | 70.0 | 73.4 | 76.8 | 70.0 |
| | CO2 | mass% | 0.0 | 0.0 | 0.0 | 1.2 | 2.6 | 4.0 | 3.6 | 3.4 | 3.2 | 3.4 | 3.8 | 4.4 | 0.0 | 1.6 | 3.3 | 0.0 |
| | R1234yf | mass% | 0.0 | 100.0 | 41.4 | 45.1 | 48.7 | 33.0 | 35.7 | 38.3 | 40.9 | 43.3 | 45.6 | 47.8 | 35.0 | 36.7 | 38.4 | 35.0 |
| | R134a | mass% | 100.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| GWP(AR4) | | - | 1430 | 4 | 4 | 5 | 5 | 4 | 4 | 4 | 4 | 4 | 5 | 5 | 4 | 4 | 4 | 4 |
| COP ratio (relative to R1234yf) | | % | 105 | 100 | 102 | 101 | 101 | 100 | 100 | 101 | 101 | 100 | 100 | 100 | 101 | 101 | 101 | 101 |
| Refrigerating capacity ratio (relative to R1234yf) | | % | 99 | 100 | 123 | 112 | 100 | 176 | 163 | 151 | 138 | 128 | 118 | 110 | 150 | 150 | 150 | 150 |
| Power consumption of driving force | | % | 100 | 100 | 100 | 100 | 100 | 100 | 100 | 100 | 100 | 100 | 100 | 100 | 100 | 100 | 100 | 100 |
| Power consumption for heating | | % | 95 | 100 | 33 | 33 | 33 | 33 | 33 | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 | 100 | 100 | 100 | 100 | 100 | 100 | 100 |
| Possible travel distance (with heating) | | % | 50 | 50 | 84 | 84 | 84 | 84 | 84 | 84 | 84 | 84 | 84 | 84 | 84 | 84 | 84 | 84 |
| Boiling point | | °C | -26.1 | -29.5 | -40.0 | -40.0 | -40.0 | -56.0 | -54.1 | -52.5 | -50.5 | -49.5 | -48.5 | -47.8 | -44.3 | -48.4 | -52.2 | -44.3 |
| Condensation glide | | K | 0.0 | 0.0 | 7.8 | 9.3 | 9.7 | 15.0 | 15.0 | 15.0 | 15.0 | 15.0 | 15.0 | 15.0 | 8.1 | 11.5 | 15.0 | 8.1 |
| Heating method | | System | Electric heater | Electric heater | Heat pump | Heat pump | Heat pump | Heat pump | Heat pump | Heat pump | Heat pump | Heat pump | Heat pump | Heat pump | Heat pump | Heat pump | Heat pump | Heat pump |

[Table 7]

| Item | | Unit | Comp. Ex.45 | Ex. 84 | Comp. Ex.46 | Comp. Ex.47 | Ex.85 | Comp. Ex.48 | Comp. Ex.49 | Ex.86 | Ex. 87 | Comp. Ex.50 |
|---|---|---|---|---|---|---|---|---|---|---|---|---|
| Proportion of formulations | E-HFO-1132 | mass% | 10.0 | 10.0 | 10.0 | 20.0 | 20.0 | 20.0 | 30.0 | 30.0 | 30.0 | 30.0 |
| | R1234(yf+ze) | mass% | 90.0 | 87.5 | 85.0 | 80.0 | 77.5 | 75.0 | 70.0 | 67.5 | 65.0 | 62.5 |
| | CO2 | mass% | 0.0 | 2.5 | 5.0 | 0.0 | 2.5 | 5.0 | 0.0 | 2.5 | 5.0 | 7.5 |
| | R1234yf | mass% | 67.5 | 65.6 | 63.8 | 60.0 | 58.1 | 56.3 | 52.5 | 50.6 | 48.8 | 46.9 |
| | R134a | mass% | 0.0 | 0.0 | 0.0 | 0.0 | 0.0 | 0.0 | 0.0 | 0.0 | 0.0 | 0.0 |
| GWP(AR4) | | - | 4 | 4 | 4 | 4 | 4 | 4 | 3 | 3 | 3 | 3 |
| COP ratio(relative to R1234yf) | | % | 101 | 100 | 100 | 101 | 100 | 100 | 101 | 100 | 99 | 98 |
| Refrigerating capacity ratio (relative to R1234yf) | | % | 116 | 131 | 147 | 137 | 153 | 170 | 158 | 174 | 192 | 210 |
| Power consumption of driving force | | % | 100 | 100 | 100 | 100 | 100 | 100 | 100 | 100 | 100 | 100 |
| Power consumption for heating | | % | 100 | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 | 100 |
| Possible travel distance (with heating) | | % | 50 | 84 | 84 | 84 | 84 | 84 | 84 | 84 | 84 | 84 |
| Boiling point | | °C | -37.5 | -47.5 | -55.0 | -42.2 | -50.7 | -57.2 | -45.1 | -52.8 | -58.7 | -63.2 |
| Condensation glide | | K | 5.6 | 11.7 | 16.8 | 7.1 | 12.1 | 16.4 | 7.0 | 11.4 | 15.0 | 17.9 |
| Heating method | | System | Electric heater | Heat pump | Heat pump | Heat pump | Heat pump | Heat pump | Heat pump | Heat pump | Heat pump | Heat pump |

| Item | | Unit | Comp. Ex.51 | Ex. 88 | Comp. Ex. 52 | Comp. Ex.53 | Ex. 89 | Comp. Ex.54 | Comp. Ex.55 | Ex. 90 | Comp. Ex.56 |
|---|---|---|---|---|---|---|---|---|---|---|---|
| Proportion of formulations | E-HFO-1132 | mass% | 10.0 | 10.0 | 10.0 | 20.0 | 20.0 | 20.0 | 30.0 | 30.0 | 30.0 |
| | R1234(yf+ze) | mass% | 90.0 | 87.5 | 85.0 | 80.0 | 77.5 | 75.0 | 70.0 | 67.5 | 65.0 |
| | CO2 | mass% | 0.0 | 2.5 | 5.0 | 0.0 | 2.5 | 5.0 | 0.0 | 2.5 | 5.0 |
| | R1234yf | mass% | 45.0 | 43.8 | 42.5 | 40.0 | 38.8 | 37.5 | 35.0 | 33.8 | 32.5 |
| | R134a | mass% | 0.0 | 0.0 | 0.0 | 0.0 | 0.0 | 0.0 | 0.0 | 0.0 | 0.0 |
| GWP(AR4) | | - | 5 | 5 | 4 | 4 | 4 | 4 | 4 | 4 | 4 |
| COP ratio(relative to R1234yf) | | % | 101 | 101 | 100 | 102 | 101 | 100 | 101 | 100 | 100 |
| Refrigerating capacity ratio (relative to R1234yf) | | % | 108 | 122 | 138 | 129 | 145 | 161 | 150 | 166 | 183 |
| Power consumption of driving force | | % | 100 | 100 | 100 | 100 | 100 | 100 | 100 | 100 | 100 |
| Power consumption for heating | | % | 100 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 84 | 84 | 84 | 84 | 84 | 84 | 84 | 84 |
| Boiling point | | °C | -36.0 | -46.4 | -54.0 | -41.2 | -49.9 | -56.4 | -44.3 | -52.2 | -58.1 |
| Condensation glide | | K | 6.4 | 12.9 | 18.2 | 8.1 | 13.5 | 17.8 | 8.1 | 12.7 | 16.5 |
| Heating method | | System | Electric heater | Heat pump | Heat pump | Heat pump | Heat pump | Heat pump | Heat pump | Heat pump | Heat pump |

| Item | | Unit | Comp. Ex.57 | Ex.91 | Comp. Ex.58 | Comp. Ex.59 | Ex. 92 | Comp. Ex.60 | Comp. Ex.61 | Ex. 93 | Comp. Ex.62 |
|---|---|---|---|---|---|---|---|---|---|---|---|
| Proportion of formulations | E-HFO-1132 | mass% | 10.0 | 10.0 | 10.0 | 20.0 | 20.0 | 20.0 | 30.0 | 30.0 | 30.0 |
| | R1234(yf+ze) | mass% | 90.0 | 87.5 | 85.0 | 80.0 | 77.5 | 75.0 | 70.0 | 67.5 | 65.0 |
| | CO2 | mass% | 0.0 | 2.5 | 5.0 | 0.0 | 2.5 | 5.0 | 0.0 | 2.5 | 5.0 |
| | R1234yf | mass% | 22.5 | 21.9 | 21.3 | 20.0 | 19.4 | 18.8 | 17.5 | 16.9 | 16.3 |
| | R134a | mass% | 0.0 | 0.0 | 0.0 | 0.0 | 0.0 | 0.0 | 0.0 | 0.0 | 0.0 |
| GWP(AR4) | | - | 5 | 5 | 5 | 5 | 4 | 4 | 4 | 4 | 4 |
| COP ratio(relative to R1234yf) | | % | 102 | 101 | 101 | 102 | 102 | 101 | 102 | 101 | 100 |
| Refrigerating capacity ratio(relative to R1234yf) | | % | 100 | 114 | 129 | 121 | 136 | 153 | 142 | 158 | 175 |
| Power consumption of driving force | | % | 100 | 100 | 100 | 100 | 100 | 100 | 100 | 100 | 100 |
| Power consumption for heating | | % | 100 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 84 | 84 | 84 | 84 | 84 | 84 | 84 | 84 |
| Boiling point | | °C | -34.4 | -45.2 | -52.9 | -40.0 | -49.1 | -55.6 | -43.4 | -51.6 | -57.5 |
| Condensation glide | | K | 7.1 | 14.2 | 19.7 | 9.2 | 14.9 | 19.4 | 9.3 | 14.2 | 18.0 |
| Heating method | | System | Electric heater | Heat pump | Heat pump | Heat pump | Heat pump | Heat pump | Heat pump | Heat pump | Heat pump |

The results indicate as follow.

In a case where the refrigerant of the present disclosure comprises R1234yf, and when the mass% of HFO-1132(E), R1234yf, and $CO_2$ based on their sum is respectively represented by x, y, and z, coordinates (x,y,z) in a ternary composition diagram in which the sum of HFO-1132 (E), R1234yf, and $CO_2$ is 100 mass% are within the range of a figure surrounded by straight lines $A_{r=0}B_{r=0}$, $B_{r=0}O_{r=0}$, and $O_{r=0}A_{r=0}$ that connect the following 3 points:

> point $A_{r=0}$ (30.0, 69.1, 0.9),
> point $B_{r=0}$ (6.2, 83.8, 10.0), and
> point $O_{r=0}$ (30.0, 60.0, 10.0), or
> on the above straight lines, the refrigerant of the present disclosure has a refrigerating capacity ratio of 90% or more relative to that of R404A.

In a case where the refrigerant of the present disclosure comprises R1234yf, and coordinates (x,y,z) in a ternary composition diagram in which the sum of HFO-1132(E), R1234yf, and $CO_2$ is 100 mass% are within the range of a figure surrounded by straight lines $E_{r=0}F_{r=0}$, $F_{r=0}O_{r=0}$, and $O_{r=0}E_{r=0}$ that connect the following 3 points:

> point $E_{r=0}$ (30.0, 66.2, 3.8),
> point $F_{r=0}$ (13.4, 76.6, 10.0), and
> point $O_{r=0}$ (30.0, 60.0, 10.0), or
> on the above straight lines, the refrigerant of the present disclosure has a refrigerating capacity ratio of 100% or more relative to that of R404A.

In a case where the refrigerant of the present disclosure comprises R1234ze, and when the mass% of HFO-1132(E), R1234ze and $CO_2$ based on their sum is respectively represented by x, y, and z, coordinates (x,y,z) in a ternary composition diagram in which the sum of HFO-1132 (E), R1234ze, and $CO_2$ is 100 mass% are within the range of a figure surrounded by straight lines $A_{r=1}B_{r=1}$, $B_{r=1}O_{r=1}$, and $O_{r=1}A_{r=1}$ that connect the following 3 points:

> point $A_{r=1}$ (30.0, 62.9, 7.1),
> point $B_{r=1}$ (23.1, 66.9, 10.0), and
> point $O_{r=1}$ (30.0, 60.0, 10.0), or
> on the above straight line, the refrigerant of the present disclosure has a refrigerating capacity ratio of 90% or more relative to that of R404A.

In a case where the refrigerant of the present disclosure comprises 30.0 mass% of HFO-1132(E), 60.0 mass% of R1234ze, and 10.0 mass% of $CO_2$ based on the sum of HFO-1132(E), R1234ze, and $CO_2$, the refrigerant of the present disclosure has a refrigerating capacity ratio of 100% relative to that of R404A.

When a ratio of R1234ze to the sum of R1234yf and R1234ze is represented by r (0<r<1), and when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by straight lines $A_{r=0}B_{r=0}$, $B_{r=0}O_{r=0}$, and $O_{r=0}A_{r=0}$ that connect the following 3 points:

> point $A_r$ (30.0, -6.2r+69.1, 6.2r+0.9),
> point $B_r$ ($0.2r^2+16.7r+6.2$, $-0.2r^2-16.7r+83.8$, 10.0), and
> point $O_r$ (30.0, 60.0, 10.0), or
> on the above straight lines, the refrigerant of the present disclosure has a refrigerating capacity ratio of 90% or more relative to that of R404A.

When a ratio of R1234ze to the sum of R1234yf and R1234ze is represented by r (0<r<1), and when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by straight lines $A_rB_r$, $B_rO_r$, and $O_rA_r$ that connect the following 3 points:

> point $E_r$ (30.0, $0.4r^2-6.6r+66.2$, $-0.4r^2+6.6r+3.8$),
> point $F_r$ ($-1.2r^2+17.8r+13.4$, $1.2r^2-17.8r+76.6$, 10.0), and
> point $O_r$ (30.0, 60.0, 10.0), or
> on the above straight lines, the refrigerant of the present disclosure has a refrigerating capacity ratio of 100% or more relative to that of R404A.

In a case where the refrigerant of the present disclosure comprises R1234yf, and when the mass% of HFO-1132(E), R1234yf, and CO2 based on their sum is respectively represented by x, y, and z, coordinates (x,y,z) in a ternary composition diagram in which the sum of HFO-1132(E), R1234yf, and $CO_2$ is 100 mass% are within the range of a figure surrounded by line segments $H_{r=0}I_{r=0}$, $I_{r=0}J_{r=0}$, $J_{r=0}J2_{r=0}$, $J2_{r=0}K2_{r=0}$, $K2_{r=0}K_{r=0}$, $K_{r=0}Q_{r=0}$, and $Q_{r=0}H_{r=0}$ that connect the following 7 points:

point $H_{r=0}$ (12.2, 87.8, 0.0),
point $I_{r=0}$ (0.0, 98.1, 1.9),
point $J_{r=0}$ (0.0, 94.8, 5.2),
point $J2_{r=0}$ (10.0, 85.4, 4.6),
point $K2_{r=0}$ (20.0, 75.1, 4.9),
point $K_{r=0}$ (30.0, 64.0, 6.0), and
point $Q_{r=0}$ (30.0, 70.0, 0.0), or
on the above line segments $H_{r=0}I_{r=0}$, $I_{r=0}J_{r=0}$, $J_{r=0}K_{r=0}$, and $K_{r=0}Q_{r=0}$ (excluding points $H_{r=0}$ and Qr=o) ;

line segments $I_{r=0}J_{r=0}$, $K_{r=0}Q_{r=0}$, and $Q_{r=0}H_{r=0}$ are straight lines;
the coordinates (x,y,z) of points on the line segment $H_{r=0}I_{r=0}$ are represented by (x, $-0.0013x^2-0.8279x+98.1$, $0.0013x^2-0.1721x+1.9$) ;
the coordinates (x,y,z) of points on the line segment $J_{r=0}J2_{r=0}$ are represented by (x, $-0.004x^2-0.9x+94.8$, $0.004x^2-0.1x+5.2$);
the coordinates (x,y,z) of points on the line segment $J2_{r=0}K2_{r=0}$ are represented by (x, $-0.006x^2-0.85x+94.5$, $0.006x^2-0.15x+5.5$); and
the coordinates (x,y,z) of points on the line segment $K2_{r=0}K_{r=0}$ are represented by (x, $-0.002x^2-1.01x+96.1$, $0.002x^2+0.01x+3.9$),

the refrigerant of the present disclosure has a boiling point of -40°C or lower and an evaporation glide of 15K or less. For the characteristics, the refrigerant is particularly suitable as a working fluid in air-conditioning equipment for electric vehicles.

In a case where the refrigerant of the present disclosure comprises R1234ze, and when the mass% of HFO-1132 (E), R1234ze and $CO_2$ based on their sum is respectively represented by x, y, and z, coordinates (x,y,z) in a ternary composition diagram in which the sum of HFO-1132(E), R1234ze, and $CO_2$ is 100 mass% are within the range of a figure surrounded by line segments $H_{r=1}I_{r=1}$, $I_{r=1}J_{r=1}$, $J_{r=1}J2_{r=1}$, $J2_{r=1}K2_{r=1}$, $K2_{r=1}K_{r=1}$, $K_{r=1}Q_{r=1}$, and $Q_{r=1}H_{r=1}$ that connect the following 7 points: point $H_{r=1}$ (22.7, 77.3, 0.0),

point $I_{r=1}$ (0.0, 96.4, 3.6),
point $J_{r=1}$ (0.0, 96.1, 3.9),
point $J2_{r=1}$ (10.0, 87.6, 2.4),
point $K2_{r=1}$ (20.0, 78.1, 1.9),
point $K_{r=1}$ (30.0, 67.8, 2.2), and
point $Q_{r=1}$ (30.0, 70.0, 0.0), or
on the above line segments $H_{r=1}I_{r=1}$, $I_{r=1}J_{r=1}$, $J_{r=1}K_{r=1}$, and $K_{r=1}Q_{r=1}$ (excluding points $H_{r=1}$ and $Q_{r=1}$);

line segments $I_{r=1}J_{r=1}$, $K_{r=1}Q_{r=1}$, and $Q_{r=1}H_{r=1}$ are straight lines;
the coordinates (x,y,z) of points on the line segment $H_{r=1}I_{r=1}$ are represented by (x, $-0.003x^2-0.7723x+96.4$, $0.003x^2-0.2277x+3.6$);
the coordinates (x,y,z) of points on the line segment $J_{r=1}J2_{r=1}$ are represented by (x, $-0.006x^2-0.79x+96.1$, $0.006x^2-0.21x+3.9$);
the coordinates (x,y,z) of points on the line segment $J2_{r=1}K2_{r=1}$ are represented by (x, $-0.002x^2-0.89x+96.7$, $0.002x^2-0.11x+3.3$); and
the coordinates (x,y,z) of points on the line segment $K2_{r=1}K_{r=1}$ are represented by (x, $-0.002x^2-0.93x+97.5$, $0.002x^2-0.07x+2.5$),

the refrigerant of the present disclosure has a boiling point of -40°C or lower and an evaporation glide of 15K or less. For the characteristics, the refrigerant is particularly suitable as a working fluid in air-conditioning equipment for electric vehicles.

When a ratio of R1234ze to the sum of R1234yf and R1234ze is represented by r (0<r<1), and when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by line segments $H_rI_r$, $I_rJ_r$, $J_rJ2_r$, $J2_rK2_r$, $K2_rK_r$, $K_rQ_r$, and $Q_rH_r$ that connect the following 7 points:

point $H_r$ ($r^2+9.5r+12.2$, $-r^2-9.5r+87.8$, 0.0),
point $I_r$ (0.0, $-0.6r^2-1.1r+98.1$, $0.6r^2+1.1r+1.9$),
point $J_r$ (0.0, $-0.6r^2+1.9r+94.8$, $0.6r^2-1.9r+5.2$),
point $J2_r$ (10.0, $-0.4r^2+2.6r+85.4$, $0.4r^2-2.6r+4.6$),
point $K2_r$ (20.0, $3.0r+75.1$, $-3.0r+4.9$),
point $K_r$ (30.0, $-0.4r^2+4.2r+64.0$, $0.4r^2-4.2r+6.0$), and
point $Q_r$ (70.0, 30.0, 0.0), or
on the above line segments $H_rI_r$, $I_rJ_r$, $J_rK_r$, and $K_rQ_r$ (excluding points $H_r$ and $Q_r$);

the line segments $I_rJ_r$, $K_rQ_r$, and $Q_rH_r$ are straight lines;
the coordinates (x,y,z) of points on the line segment $H_rI_r$ are represented by (x, $(-0.003r^2+0.0013r-0.0013)x^2+$ $(0.102r^2-0.0464r-0.8279)x+$ $(-0.6r^2-1.1r+98.1)$, $(0.003r^2-0.0013r+0.0013)x^2+(-0.102r^2+0.0464r-0.1721)$ $x+(0.6r^2+1.1r+1.9)$);
the coordinates (x,y,z) of points on the line segment $J_rJ2_r$ are represented by (x, $(0.0068r^2-0.0034r-0.004)x^2+$ $(0.06r^2+0.05r-0.9)x+ (-0.6r^2+1.9r+94.8)$, $(0.004r^2-0.002r+0.004)x^2+(-0.06r^2-0.05r-0.1)x+(0.6r^2-1.9r+5.2)$);
the coordinates (x,y,z) of points on the line segment $J2_rK2_r$ are represented by (x, $(0.016r^2-0.012r-0.006)x^2$ $+(-0.44r^2+0.4r-0.85)x+(2.4r^2-0.2r+94.5)$, $(-0.016r^2+0.012r+0.006)x^2+(0.44r^2-0.4r-0.15)x+(-2.4r^2+0.2r+5.5)$); and
the coordinates (x,y,z) of points on the line segment $K2_rK_r$ are represented by (x, $(0.008r^2-0.008r-0.002)x^2$ $+(-0.44r^2+0.52r-1.01)x+(5.6r^2-4.2r+96.1)$, $(-0.008r^2+0.008r+0.002)x^2+(0.44r^2-0.52r+0.01)x+(-5.6r^2$ $+4.2r+3.9)$), the refrigerant of the present disclosure has a boiling point of -40°C or lower and an evaporation glide of 15K or less. For the characteristics, the refrigerant is particularly suitable as a working fluid in air-conditioning equipment for electric vehicles.

Coordinates of each of the points were determined by obtaining the approximate expression based on each of the points shown in the above tables. Specifically, calculation was performed as shown in Tables 8 to 16.

[Table 8]

| Item | $A_r$ | | | $B_r$ | | |
|---|---|---|---|---|---|---|
| | 0 | 0.5 | 1 | 0 | 0.5 | 1 |
| E-HFO-1132 | 30.0 | 30.0 | 30.0 | 6.2 | 14.6 | 23.1 |
| R1234(yf+ze) | 69.1 | 66.0 | 62.9 | 83.8 | 75.4 | 66.9 |
| CO2 | 0.9 | 4.0 | 7.1 | 10.0 | 10.0 | 10.0 |
| r expression (E-HFO-1132) | 30.0 | | | $0.2r^2+16.7r+6.2$ | | |
| r expression (R1234(yf+ze))) | $-6.2r+69.1$ | | | $-0.2r^2-16.7r+83.8$ | | |
| r expression (CO2) | $6.2r+0.9$ | | | 10.0 | | |
| Item | $E_r$ | | | $F_r$ | | |
| | 0 | 0.5 | 1 | 0 | 0.5 | 1 |
| E-HFO-1132 | 30.0 | 30.0 | 30.0 | 13.4 | 22.0 | 30.0 |
| R1234(yf+ze) | 66.2 | 63.0 | 60.0 | 76.6 | 68.0 | 60.0 |
| CO2 | 3.8 | 7.0 | 10.0 | 10.0 | 10.0 | 10.0 |
| r expression (E-HFO-1132) | 30.0 | | | $-1.2r^2+17.8r+13.4$ | | |
| r expression (R1234(yf+ze))) | $0.4r^2-6.6r+66.2$ | | | $1.2r^2-17.8r+76.6$ | | |
| r expression (CO2) | $-0.4r^2+6.6r+3.8$ | | | 10.0 | | |

[Table 9]

| Item | $H_{r=0}HI_{r=0}I_{r=0}$ curve expression | | | $K_{r=0}K1_{r=0}K2_{r=0}$ curve expression | | |
|---|---|---|---|---|---|---|
| | $Hr=0$ | $HI_{r=0}$ | $I_{r=0}$ | $Kr=0$ | $K1_{r=0}$ | $K2_{r=0}$ |
| E-HFO-1132 | 12.2 | 6.1 | 0.0 | 30.0 | 25.0 | 20.0 |
| R1234(yf+ze) | 87.8 | 93.0 | 98.1 | 64.0 | 69.6 | 75.1 |
| CO2 | 0.0 | 0.9 | 1.9 | 6.0 | 5.4 | 4.9 |
| x=E-HFO-1132 | x | | | x | | |
| x expression (R1234(yf+ze))) | $-0.0013x^2-0.8279x+98.1$ | | | $-0.002x^2-1.01x+96.1$ | | |
| x expression (CO2) | $0.0013x^2-0.1721x+1.9$ | | | $0.002x^2+0.01x+3.9$ | | |
| Item | $K2_{r=0}KJ_{r=0}J2_{r=0}$ curve expression | | | $J2_{r=0}J1_{r=0}J_{r=0}$ curve expression | | |
| | $K2_{r=0}$ | $KJ_{r=0}$ | $J2_{r=0}$ | $J2_{r=0}$ | $J1_{r=0}$ | $J_{r=0}$ |
| E-HFO-1132 | 20.0 | 15.0 | 10.0 | 10.0 | 5.0 | 0.0 |
| R1234(yf+ze) | 75.1 | 80.4 | 85.4 | 85.4 | 90.2 | 94.8 |
| CO2 | 4.9 | 4.6 | 4.6 | 4.6 | 4.8 | 5.2 |
| x=E-HFO-1132 | x | | | x | | |
| x expression (R1234(yf+ze))) | $-0.006x^2-0.\ 85x+94.5$ | | | $-0.004x^2-0.9x+94.8$ | | |
| x expression (CO2) | $0.006x^2-0.15x+5.5$ | | | $0.004x^2-0.1x+5.2$ | | |

[Table 10]

| Item | $H_r=0.5HI_r=0.5I_r=0.5$ curve expression | | | $K_r=0.5K1_{r=0.5}K2_{r=0.5}$ curve expression | | |
|---|---|---|---|---|---|---|
| | $H_{r=0.5}$ | $HI_{r=0.5}$ | $I_{r=0.5}$ | $K_{r=0.5}$ | $K1_{r=0.5}$ | $K2_{r=0.5}$ |
| E-HFO-1132 | 17.2 | 8.6 | 0.0 | 30.0 | 25.0 | 20.0 |
| R1234(yf+ze) | 82.8 | 90.2 | 97.4 | 66.0 | 71.4 | 76.6 |
| CO2 | 0.0 | 1.2 | 2.6 | 4.0 | 3.6 | 3.4 |
| x=E-HFO-1132 | x | | | x | | |
| x expression (R1234(yf+ze))) | $-0.0014x^2-0.8256x+97.4$ | | | $-0.004x^2-0.86x+95.4$ | | |
| x expression (CO2) | $0.0014x^2-0.1744x+2.6$ | | | $0.004x^2-0.14x+4.6$ | | |
| Item | $K2_{r=0.5}KJ_{r=0.5}J2_{r=0.5}$ curve expression | | | $J2_{r=0.5}J1_{r=0.5}J_{r=0.5}$ curve expression | | |
| | $K2_{r=0.5}$ | $KJ_{r=0.5}$ | $J2_{r=0.5}$ | $J2_{r=0.5}$ | $J1_{r=0.5}$ | $J_{r=0.5}$ |
| E-HFO-1132 | 20.0 | 15.0 | 10.0 | 10.0 | 5.0 | 0.0 |
| R1234(yf+ze) | 76.6 | 81.8 | 86.6 | 86.6 | 91.2 | 95.6 |
| CO2 | 3.4 | 3.2 | 3.4 | 3.4 | 3.8 | 4.4 |
| x=E-HFO-1132 | x | | | x | | |
| x expression (R1234(yf+ze))) | $-0.008x^2-0.76x+95.0$ | | | $-0.004x^2-0.86x+95.6$ | | |
| x expression (CO2) | $0.008x^2-0.24x+5.0$ | | | $0.004x^2-0.14x+4.4$ | | |

[Table 11]

| Item | $H_{r=1}HI_{r=1}I_{r=1}$ curve expression | | | $K_{r=1}K1_{r=1}K2_{r=1}$ curve expression | | |
|---|---|---|---|---|---|---|
| | $H_{r=1}$ | $HI_{r=1}$ | $I_{r=1}$ | $K_{r=1}$ | $K1_{r=1}$ | $K2_{r=1}$ |
| E-HFO-1132 | 22.7 | 11.4 | 0.0 | 30.0 | 25.0 | 20.0 |
| R1234(yf+ze) | 77.3 | 87.2 | 96.4 | 67.8 | 73.0 | 78.1 |

(continued)

| Item | $H_{r=1}HI_{r=1}I_{r=1}$ curve expression | | | $K_{r=1}K1_{r=1}K2_{r=1}$ curve expression | | |
|---|---|---|---|---|---|---|
| | $H_{r=1}$ | $HI_{r=1}$ | $I_{r=1}$ | $K_{r=1}$ | $K1_{r=1}$ | $K2_{r=1}$ |
| CO2 | 0.0 | 1.4 | 3.6 | 2.2 | 2.0 | 1.9 |
| x=E-HFO-1132 | x | | | x | | |
| x expression (R1234(yf+ze))) | $-0.003x^2-0.7723x+96.4$ | | | $-0.002x^2-0.93x+97.5$ | | |
| x expression (CO2) | $0.003x^2-0.2277x+3.6$ | | | $0.002x^2-0.07x+2.5$ | | |

| Item | $K2_{r=1}KJ_{r=1}J2_{r=1}$ curve expression | | | $J2_{r=1}J1_{r=1}J_{r=1}$ curve expression | | |
|---|---|---|---|---|---|---|
| | $K2_{r=1}$ | $KJ_{r=1}$ | $J2_{r=1}$ | $J2_{r=1}$ | $J1_{r=1}$ | $J_{r=1}$ |
| E-HFO-1132 | 20.0 | 15.0 | 10.0 | 10.0 | 5.0 | 0.0 |
| R1234(yf+ze) | 78.1 | 82.9 | 87.6 | 87.6 | 92.0 | 96.1 |
| CO2 | 1.9 | 2.1 | 2.4 | 2.4 | 3.0 | 3.9 |
| x=E-HFO-1132 | x | | | x | | |
| x expression (R1234(yf+ze))) | $-0.002x^2-0.89x+96.7$ | | | $-0.006x^2-0.79x+96.1$ | | |
| x expression (CO2) | $0.002x^2-0.11x+3.3$ | | | $0.006x^2-0.21x+3.9$ | | |

[Table 12]

| Item | $H_r$ | | | $HI_r$ | | |
|---|---|---|---|---|---|---|
| | 0 | 0.5 | 1 | 0 | 0.5 | 1 |
| E-HFO-1132 | 12.2 | 17.2 | 22.7 | 6.1 | 8.6 | 11.4 |
| R1234(yf+ze) | 87.8 | 82.8 | 77.3 | 93.0 | 90.2 | 87.2 |
| CO2 | 0.0 | 0.0 | 0.0 | 0.9 | 1.2 | 1.4 |
| r expression (E-HFO-1132) | $r^2+9.5r+12.2$ | | | $0.6r^2+4.7r+6.1$ | | |
| r expression (R1234(yf+ze))) | $-r^2-9.5r+87.8$ | | | $-0.4r^2-5.4r+93.0$ | | |
| r expression (CO2) | 0.0 | | | $-0.2r^2+0.7r+0.9$ | | |

| Item | $I_r$ | | | $K_r$ | | |
|---|---|---|---|---|---|---|
| | 0 | 0.5 | 1 | 0 | 0.5 | 1 |
| E-HFO-1132 | 0.0 | 0.0 | 0.0 | 30.0 | 30.0 | 30.0 |
| R1234(yf+ze) | 98.1 | 97.4 | 96.4 | 64.0 | 66.0 | 67.8 |
| CO2 | 1.9 | 2.6 | 3.6 | 6.0 | 4.0 | 2.2 |
| r expression (E-HFO-1132) | 0.0 | | | 30.0 | | |
| r expression (R1234(yf+ze))) | $-0.6r^2-1.1r+98.1$ | | | $-0.4r^2+4.2r+64.0$ | | |
| r expression (CO2) | $0.6r^2+1.1r+1.9$ | | | $0.4r^2-4.2r+6.0$ | | |

[Table 13]

| Item | $K1_r$ | | | $K2_r$ | | |
|---|---|---|---|---|---|---|
| | 0 | 0.5 | 1 | 0 | 0.5 | 1 |
| E-HFO-1132 | 25.0 | 25.0 | 25.0 | 20.0 | 20.0 | 20.0 |
| R1234(yf+ze) | 69.6 | 71.4 | 73.0 | 75.1 | 76.6 | 78.1 |
| CO2 | 5.4 | 3.6 | 2.0 | 4.9 | 3.4 | 1.9 |
| r expression (E-HFO-1132) | 25.0 | | | 20.0 | | |

(continued)

| Item | K1$_r$ | | | K2$_r$ | | |
|---|---|---|---|---|---|---|
| | 0 | 0.5 | 1 | 0 | 0.5 | 1 |
| r expression (R1234(yf+ze))) | -0.4r$^2$+3.8r+69.6 | | | 3.0r+75.1 | | |
| r expression (CO2) | 0.4r$^2$-3.8r+5.4 | | | -3.0r+4.9 | | |
| Item | KJ$_r$ | | | J2$_r$ | | |
| | 0 | 0.5 | 1 | 0 | 0.5 | 1 |
| E-HFO-1132 | 15.0 | 15.0 | 15.0 | 10.0 | 10.0 | 10.0 |
| R1234(yf+ze) | 80.4 | 81.8 | 82.9 | 85.4 | 86.6 | 87.6 |
| CO2 | 4.6 | 3.2 | 2.1 | 4.6 | 3.4 | 2.4 |
| r expression (E-HFO-1132) | 15.0 | | | 10.0 | | |
| r expression (R1234(yf+ze))) | -0.6r$^2$+3.1r+80.4 | | | -0.4r$^2$+2.6r+85.4 | | |
| r expression (CO2) | 0.6r$^2$-3.1r+4.6 | | | 0.4r$^2$-2.6r+4.6 | | |

[Table 14]

| Item | J1$_r$ | | | J$_r$ | | |
|---|---|---|---|---|---|---|
| | 0 | 0.5 | 1 | 0 | 0.5 | 1 |
| E-HFO-1132 | 5.0 | 5.0 | 5.0 | 0.0 | 0.0 | 0.0 |
| R1234(yf+ze) | 90.2 | 91.2 | 92.0 | 94.8 | 95.6 | 96.1 |
| CO2 | 4.8 | 3.8 | 3.0 | 5.2 | 4.4 | 3.9 |
| r expression (E-HFO-1132) | 5.0 | | | 0.0 | | |
| r expression (R1234(yf+ze))) | -0.4r$^2$+2.2r+90.2 | | | -0.6r$^2$+1.9r+94.8 | | |
| r expression (CO2) | 0.4r$^2$-2.2r+4.8 | | | 0.6r$^2$-1.9r+5.2 | | |

[Table 15]

| Item | H$_{r=0}$HI$_{r=0}$I$_{r=0}$ curve expression | | | K$_{r=0}$K1$_{r=0}$K2$_{r=0}$ curve expression | | |
|---|---|---|---|---|---|---|
| x=E-HFO-1132 | x | | | x | | |
| x expression (R1234(yf+ze))) | -0.0013x$^2$-0.8279x+98.1 | | | -0.002x$^2$-1.01x+96.1 | | |
| x expression (CO2) | 0.0013x$^2$-0.1721x+1.9 | | | 0.002x$^2$+0.01x+3.9 | | |
| Item | H$_{r=0.5}$HI$_{r=0.5}$I$_{r=0.5}$ curve expression | | | K$_{r=0.5}$K1$_{r=0.5}$K2$_{r=0.5}$ curve expression | | |
| x=E-HFO-1132 | x | | | x | | |
| x expression (R1234(yf+ze))) | -0.0014x$^2$-0.8256x+97.4 | | | -0.004x$^2$-0.86x+95.4 | | |
| x expression (CO2) | 0.0014x$^2$-0.1744x+2.6 | | | 0.004x$^2$-0.14x+4.6 | | |
| Item | H$_{r=1}$HI$_{r=1}$I$_{r=1}$ curve expression | | | K$_{r=1}$K1$_{r=1}$K2$_{r=1}$ curve expression | | |
| x=E-HFO-1132 | x | | | x | | |
| x expression (R1234(yf+ze))) | -0.003x$^2$-0.7723x+96.4 | | | -0.002x$^2$-0.93x+97.5 | | |
| x expression (CO2) | 0.003x$^2$-0.2277x+3.6 | | | 0.002x$^2$-0.07x+2.5 | | |
| r and x expression (R1234(yf+ze)) | | | | | | |
| ln ax$^2$+bx+c | a | b | c | a | b | c |

(continued)

| Item | | $H_{r=1}HI_{r=1}I_{r=1}$ curve expression | | | $K_{r=1}K1_{r=1}K2_{r=1}$ curve expression | | |
|---|---|---|---|---|---|---|---|
| r= | 0 | -0.0013 | -0.8279 | 98.1 | -0.002 | -1.01 | 96.1 |
| | 0.5 | -0.0014 | -0.8256 | 97.4 | -0.004 | -0.86 | 95.4 |
| | 1 | -0.003 | -0.7723 | 96.4 | -0.002 | -0.93 | 97.5 |
| r and x expression | | $(-0.003r^2+0.0013r-0.0013)x^2$ $+(0.102r^2-0.0464r-0.8279)x$ $+(-0.6r^2-1.1r+98.1)$ | | | $(0.008r^2-0.008r-0.002)x^2 +(-0.44r^2$ $+0.52r-1.01)x +(5.6r^2-4.2r+96.1)$ | | |
| r and x expression (CO2) | | | | | | | |
| ln $ax^2+bx+c$ | | a | b | c | a | b | c |
| r= | 0 | 0.0013 | -0.1721 | 1.9 | 0.002 | 0.01 | 3.9 |
| | 0.5 | 0.0014 | -0.1744 | 2.6 | 0.004 | -0.14 | 4.6 |
| | 1 | 0.003 | -0.2277 | 3.6 | 0.002 | -0.07 | 2.5 |
| r and x expression | | $(0.003r^2-0.0013r+0.0013)x^2 +(-0.102r^2$ $+0.0464r-0.1721)x +(0.6r^2+1.1r+1.9)$ | | | $(-0.008r^2+0.008r+0.002)x^2$ $+(0.44r^2-0.52r+0.01)x +(-5.6r^2+4.2r+3.9)$ | | |

[Table 16]

| Item | | $K2_{r=0}KJ_{r=0}J2_{r=0}$ curve expression | | | $J2_{r=0}J1_{r=0}J_{r=0}$ curve expression | | |
|---|---|---|---|---|---|---|---|
| x=E-HFO-1132 | | x | | | x | | |
| x expression (R1234(yf+ze))) | | -0.006x^2-0.85x+94.5 | | | -0.004x^2-0.9x+94.8 | | |
| x expression (CO2) | | 0.006x^2-0.15x+5.5 | | | 0.004x^2-0.1x+5.2 | | |
| Item | | $K2_{r=0.5}KJ_{r=0.5}J2_{r=0.5}$ curve expression | | | $J2_{r=0.5}J1_{r=0.5}J_{r=0.5}$ curve expression | | |
| x=E-HFO-1132 | | x | | | x | | |
| x expression (R1234(yf+ze))) | | -0.008x^2-0.76x+95.0 | | | -0.004x^2-0.86x+95.6 | | |
| x expression (CO2) | | 0.008x^2-0.24x+5.0 | | | 0.004x^2-0.14x+4.4 | | |
| Item | | $K2_{r=1}KJ_{r=1}J2_{r=1}$ curve expression | | | $J2_{r=1}J1_{r=1}J_{r=1}$ curve expression | | |
| x=E-HFO-1132 | | x | | | x | | |
| x expression (R1234(yf+ze))) | | -0.002x^2-0.89x+96.7 | | | -0.006x^2-0.79x+96.1 | | |
| x expression (CO2) | | 0.002x^2-0.11x+3.3 | | | 0.006x^2-0.21x+3.9 | | |
| r and x expression (R1234(yf+ze)) | | | | | | | |
| ln $ax^2+bx+c$ | | a | b | c | a | b | c |
| r= | 0 | -0.006 | -0.85 | 94.5 | -0.004 | -0.9 | 94.8 |
| | 0.5 | -0.008 | -0.76 | 95.0 | -0.004 | -0.86 | 95.6 |
| | 1 | -0.002 | -0.89 | 96.7 | -0.0006 | -0.79 | 96.1 |
| r and x expression | | $(0.016r^2-0.012r-0.006)x^2 +(-0.44r^2$ $+0.4r-0.85)x +(2.4r^2-0.2r+94.5)$ | | | $(0.0068r^2-0.0034r-0.004)x^2 +(0.06r^2$ $+0.05r-0.9)x +(-0.6r^2+1.9r+94.8)$ | | |

(continued)

| r and x expression (CO2) | | | | | | | |
|---|---|---|---|---|---|---|---|
| In $ax^2+bx+c$ | | a | b | c | a | b | c |
| r= | 0 | 0.006 | -0.15 | 5.5 | 0.004 | -0.1 | 5.2 |
| | 0.5 | 0.008 | -0.24 | 5 | 0.004 | -0.14 | 4.4 |
| | 1 | 0.002 | -0.11 | 3.3 | 0.006 | -0.21 | 3.9 |
| r and x expression | | $(-0.016r^2+0.012r+0.006)x^2$ $+(0.44r^2-0.4r-0.15)x +(-2.4r^2+0.2r+5.5)$ | | | $(0.004r^2-0.002r+0.004)x^2$ $+(-0.06r^2-0.05r-0.1)x +(0.6r^2-1.9r+5.2)$ | | |

**Claims**

1. A composition comprising a refrigerant,
   the refrigerant comprising 2,3,3,3-tetrafluoro-1-propene(R1234yf) and/or 1,3,3,3-tetrafluoropropene (R1234ze), trans-1,2-difluoroethylene (HFO-1132(E)), and $CO_2$,
   wherein the content of HFO-1132(E) is 30 mass% or less, and the content of $CO_2$ is 10 mass% or less, based on the entire refrigerant.

2. The composition according to claim 1, wherein

   the refrigerant comprises R1234yf, and
   when the mass% of HFO-1132 (E), R1234yf, and $CO_2$ based on their sum is respectively represented by x, y, and z, coordinates (x,y,z) in a ternary composition diagram in which the sum of HFO-1132(E), R1234yf, and $CO_2$ is 100 mass% are within the range of a figure surrounded by straight lines $A_{r=0}B_{r=0}$, $B_{r=0}O_{r=0}$, and $O_{r=o}A_{r=0}$ that connect the following 3 points:

   point $A_{r=0}$ (30.0, 69.1, 0.9),
   point $B_{r=0}$ (6.2, 83.8, 10.0), and
   point $O_{r=0}$ (30.0, 60.0, 10.0), or
   on the above straight lines.

3. The composition according to claim 1, wherein

   the refrigerant comprises R1234ze, and
   when the mass% of HFO-1132 (E), R1234ze and $CO_2$ based on their sum is respectively represented by x, y, and z, coordinates (x,y,z) in a ternary composition diagram in which the sum of HFO-1132(E), R1234ze, and $CO_2$ is 100 mass% are within the range of a figure surrounded by straight lines $A_{r=1}B_{r=1}$, $B_{r=1}O_{r=1}$, and $O_{r=1}A_{r=1}$ that connect the following 3 points:

   point $A_{r=1}$ (30.0, 62.9, 7.1),
   point $B_{r=1}$ (23.1, 66.9, 10.0), and
   point $O_{r=1}$ (30.0, 60.0, 10.0), or
   on the above straight lines.

4. The composition according to claim 1, wherein

   the refrigerant comprises R1234yf and R1234ze, and
   when a ratio of R1234ze to the sum of R1234yf and R1234ze is represented by r (0<r<1), and
   when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by straight lines $A_{r=0}B_{r=0}$, $B_{r=0}O_{r=0}$, and $O_{r=0}A_{r=0}$ that connect the following 3 points:

   point $A_r$ (30.0, -6.2r+69.1, 6.2r+0.9),
   point $B_r$ (0.2r^2+16.7r+6.2, -0.2r^2-16.7r+83.8, 10.0), and

point $O_r$ (30.0, 60.0, 10.0), or
on the above straight lines.

5. The composition according to claim 1, wherein

the refrigerant comprises R1234yf, and
when the mass% of HFO-1132(E), R1234yf and $CO_2$ based on their sum is respectively represented by x, y, and z, coordinates (x,y,z) in a ternary composition diagram in which the sum of HFO-1132(E), R1234yf, and $CO_2$ is 100 mass% are within the range of a figure surrounded by line segments $H_{r=0}I_{r=0}$, $I_{r=0}J_{r=0}$, $J_{r=0}J2_{r=0}$, $J2_{r=0}K2_{r=0}$, $K2_{r=0}K_{r=0}$, $K_{r=0}Q_{r=0}$, and $Q_{r=o}H_{r=0}$ that connect the following 7 points:

point $H_{r=0}$ (12.2, 87.8, 0.0),
point $I_{r=0}$ (0.0, 98.1, 1.9),
point $J_{r=0}$ (0.0, 94.8, 5.2),
point $J2_{r=0}$ (10.0, 85.4, 4.6),
point $K2_{r=0}$ (20.0, 75.1, 4.9),
point $K_{r=0}$ (30.0, 64.0, 6.0), and
point $Q_{r=0}$ (30.0, 70.0, 0.0), or
on the above line segments $H_{r=0}I_{r=0}$, $I_{r=0}J_{r=0}$, $J_{r=0}K_{r=0}$, and $K_{r=0}Q_{r=0}$ (excluding points $H_{r=0}$ and Qr=o) ;

the line segments $I_{r=0}J_{r=0}$, $K_{r=0}Q_{r=0}$, and $Q_{r=0}H_{r=0}$ are straight lines;
the coordinates (x,y,z) of points on the line segment $H_{r=0}I_{r=0}$ are represented by (x, $-0.0013x^2-0.8279x+98.1$, $0.0013x^2-0.1721x+1.9$) ;
the coordinates (x,y,z) of points on the line segment $J_{r=0}J2_{r=0}$ are represented by (x, $-0.004x^2-0.9x+94.8$, $0.004x^2-0.1x+5.2$) ;
the coordinates (x,y,z) of points on the line segment $J2_{r=0}K2_{r=0}$ are represented by (x, $-0.006x^2-0.85x+94.5$, $0.006x^2-0.15x+5.5$); and
the coordinates (x,y,z) of points on the line segment $K2_{r=0}K_{r=0}$ are represented by (x, $-0.002x^2-1.01x+96.1$, $0.002x^2+0.01x+3.9$).

6. The composition according to claim 1, wherein

the refrigerant comprises R1234ze, and
when the mass% of HFO-1132(E), R1234ze and $CO_2$ based on their sum is respectively represented by x, y, and z, coordinates (x,y,z) in a ternary composition diagram in which the sum of HFO-1132(E), R1234ze, and $CO_2$ is 100 mass% are within the range of a figure surrounded by line segments $H_{r=1}I_{r=1}$, $I_{r=1}J_{r=1}$, $J_{r=1}J2_{r=1}$, $J2_{r=1}K2_{r=1}$, $K2_{r=1}K_{r=1}$, $K_{r=1}Q_{r=1}$, and $Q_{r=1}H_{r=1}$ that connect the following 7 points:

point $H_{r=1}$(22.7, 77.3, 0.0),
point $I_{r=1}$ (0.0, 96.4, 3.6),
point $J_{r=1}$ (0.0, 96.1, 3.9),
point $J2_{r=1}$ (10.0, 87.6, 2.4),
point $K2_{r=1}$ (20.0, 78.1, 1.9),
point $K_{r=1}$(30.0, 67.8, 2.2), and
point $Q_{r=1}$ (30.0, 70.0, 0.0), or
on the above line segments $H_{r=1}I_{r=1}$, $I_{r=1}J_{r=1}$, $J_{r=1}K_{r=1}$, and $K_{r=1}Q_{r=1}$ (excluding points $H_{r=1}$and $Q_{r=1}$) ;

the line segments $I_{r=1}J_{r=1}$, $K_{r=1}Q_{r=1}$, and $Q_{r=1}H_{r=1}$ are straight lines;
the coordinates (x,y,z) of points on the line segment $H_{r=1}I_{r=1}$ are represented by (x, $-0.003x^2-0.7723x+96.4$, $0.003x^2-0.2277x+3.6$) ;
the coordinates (x,y,z) of points on the line segment $J_{r=1}J2_{r=1}$ are represented by (x, $-0.006x^2-0.79x+96.1$, $0.006x^2-0.21x+3.9$) ;
the coordinates (x,y,z) of points on the line segment $J2_{r=1}K2_{r=1}$ are represented by (x, $-0.002x^2-0.89x+96.7$, $0.002x^2-0.11x+3.3$); and
the coordinates (x,y,z) of points on the line segment $K2_{r=1}K_{r=1}$ are represented by (x, $-0.002x^2-0.93x+97.5$, $0.002x^2-0.07x+2.5$).

7. The composition according to claim 1, wherein

the refrigerant comprises R1234yf and R1234ze, and

when a ratio of R1234ze to the sum of R1234yf and R1234ze is represented by r (0<r<1), and

when the mass% of HFO-1132(E), the sum of R1234yf and R1234ze (R1234yf+R1234ze), and $CO_2$ based on their sum is respectively represented by x, y, and z, coordinates (x,y,z) in a ternary composition diagram in which the sum of HFO-1132(E), R1234yf+R1234ze, and $CO_2$ is 100 mass% are within the range of a figure surrounded by line segments $H_rI_r$, $I_rJ_r$, $J_rJ2_r$, $J2_rK2_r$, $K2_rK_r$, $K_rQ_r$, and $Q_rH_r$ that connect the following 7 points:

point $H_r$ ($r^2$+9.5r+12.2, $-r^2$-9.5r+87.8, 0.0),
point $I_r$ (0.0, $-0.6r^2$-1.1r+98.1, $0.6r^2$+1.1r+1.9),
point $J_r$ (0.0, $-0.6r^2$+1.9r+94.8, $0.6r^2$-1.9r+5.2),
point $J2_r$ (10.0, $-0.4r^2$+2.6r+85.4, $0.4r^2$-2.6r+4.6),
point $K2_r$ (20.0, 3.0r+75.1, -3.0r+4.9),
point $K_r$ (30.0, $-0.4r^2$+4.2r+64.0, $0.4r^2$-4.2r+6.0), and
point $Q_r$ (70.0, 30.0, 0.0), or
on the above line segments $H_rI_r$, $I_rJ_r$, $J_rK_r$, and $K_rQ_r$ (excluding points $H_r$ and Qr) ;

the line segments $I_rJ_r$, $K_rQ_r$, and $Q_rH_r$ are straight lines;
the coordinates (x,y,z) of points on the line segment $H_rI_r$ are represented by (x, ($-0.003r^2$ +0.0013r-0.0013)$x^2$+ ($0.102r^2$-0.0464r-0.8279)x+ ($-0.6r^2$-1.1r+98.1), ($0.003r^2$-0.0013r+0.0013)$x^2$ +($-0.102r^2$+0.0464r-0.1721)x+($0.6r^2$+1.1r+1.9));
the coordinates (x,y,z) of points on the line segment $J_rJ2_r$ are represented by (x, ($0.0068r^2$-0.0034r-0.004)$x^2$+($0.06r^2$+0.05r-0.9)x+ ($-0.6r^2$+1.9r+94.8), ($0.004r^2$-0.002r+0.004)$x^2$ +($-0.06r^2$-0.05r-0.1)x+($0.6r^2$-1.9r+5.2));
the coordinates (x,y,z) of points on the line segment $J2_rK2_r$ are represented by (x, ($0.016r^2$-0.012r-0.006) $x^2$+($-0.44r^2$+0.4r-0.85)x+($2.4r^2$-0.2r+94.5), ($-0.016r^2$+0.012r+0.006)$x^2$+($0.44r^2$-0.4r-0.15)x+($-2.4r^2$ +0.2r+5.5)); and
the coordinates (x,y,z) of points on the line segment $K2_rK_r$ are represented by (x, ($0.008r^2$-0.008r-0.002) $x^2$+($-0.44r^2$+0.52r-1.01)x+($5.6r^2$-4.2r+96.1), ($-0.008r^2$+0.008r+0.002)$x^2$+($0.44r^2$-0.52r+0.01)x+($-5.6r^2$ +4.2r+3.9)).

8. The composition according to any one of claims 1 to 7, for use as a working fluid for a refrigerating machine, wherein the composition further comprises a refrigeration oil.

9. The composition according to any one of claims 1 to 4, for use as an alternative refrigerant for R134a, R1234yf, or R404A.

10. Use of the composition according to any one of claims 1 to 4 as a refrigerant.

11. An electric vehicle refrigerant comprising the composition according to any one of claims 5 to 7.

12. A refrigerating machine comprising the composition according to any one of claims 1 to 8 as a working fluid.

13. A method for operating a refrigerating machine, comprising the step of circulating the composition according to any one of claims 1 to 8 as a working fluid in a refrigerating machine.

Fig. 1

Fig. 2

Fig. 3

# Fig. 4

Fig. 5

Fig. 6

## INTERNATIONAL SEARCH REPORT

| International application No. |
|---|
| **PCT/JP2023/010314** |

**A.    CLASSIFICATION OF SUBJECT MATTER**

*C09K 5/04*(2006.01)i
FI:   C09K5/04 F ZAB; C09K5/04 A

According to International Patent Classification (IPC) or to both national classification and IPC

**B.    FIELDS SEARCHED**

Minimum documentation searched (classification system followed by classification symbols)

C09K5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/256087 A1 (DAIKIN INDUSTRIES, LTD.) 24 December 2020 (2020-12-24) examples 2, 6, 8, 12, 14, 18, 20, 24-26, 30-32, 36-37, 41-42, 46, 463, 512, 530 | 1, 8-10, 12-13 |
| A | | 2-7, 11 |
| A | WO 2019/240205 A1 (DAIKIN INDUSTRIES, LTD.) 19 December 2019 (2019-12-19) example 17 | 1-13 |

☐ Further documents are listed in the continuation of Box C.    ☑ See patent family annex.

| | | |
|---|---|---|
| *    Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
|---|---|
| **28 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/010314**

| Patent document cited in search report | | | Publication date (day/month/year) | Patent family member(s) | | | Publication date (day/month/year) |
|---|---|---|---|---|---|---|---|
| WO | 2020/256087 | A1 | 24 December 2020 | US | 2022/0177763 | A1 | |
| | | | | examples 2, 6, 8, 12, 14, 18, 20, 24-26, 30-32, 36-37, 41-42, 46, 463, 512, 530 | | | |
| | | | | JP | 2021-1305 | A | |
| | | | | EP | 3988861 | A1 | |
| | | | | CN | 113993971 | A | |
| WO | 2019/240205 | A1 | 19 December 2019 | US | 2021/0246348 | A1 | |
| | | | | example 17 | | | |
| | | | | EP | 3808828 | A1 | |
| | | | | CN | 112262196 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015186557 A